(19) Europäisches Patentamt
European Patent Office
Office européen des brevets

(11) **EP 4 471 584 A1**

(12) **EUROPEAN PATENT APPLICATION**
published in accordance with Art. 153(4) EPC

(43) Date of publication:
**04.12.2024  Bulletin 2024/49**

(21) Application number: **23773676.4**

(22) Date of filing: **15.03.2023**

(51) International Patent Classification (IPC):
**G06F 9/451** (2018.01)    **H04M 1/724** (2021.01)

(52) Cooperative Patent Classification (CPC):
**G06F 9/451; G06F 1/1618; G06F 3/0481;**
**G06F 3/04817; G06F 3/0482; G06F 3/0488;**
**G06F 3/04886; H04M 1/72454;** H04M 1/0241

(86) International application number:
**PCT/CN2023/081679**

(87) International publication number:
**WO 2023/179428 (28.09.2023 Gazette 2023/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **25.03.2022  CN 202210302733**

(71) Applicant: **Huawei Technologies Co., Ltd.**
**Shenzhen, Guangdong 518129 (CN)**

(72) Inventors:
• **MIAO, Yutong**
  **Shenzhen, Guangdong 518129 (CN)**
• **LI, Chundong**
  **Shenzhen, Guangdong 518129 (CN)**
• **LIU, Fengkai**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **ADAPTIVE DISPLAY METHOD OF INTERFACE, AND TERMINAL DEVICE**

(57)    This application discloses an adaptive interface display method and a terminal device, and relates to the field of terminal technologies, to enable a same interface to adapt to terminal devices with different aspect ratios. In this application, when a screen size changes, the terminal device may use different policies such as stretching, translation, and alignment for different types of controls and elements on a to-be-displayed interface, to continuously display the interface on a changed screen by using an adapted layout. This solution enables one interface that has been developed to adapt to terminal devices with different aspect ratios by using a general adaptive algorithm, which saves extra efforts of an application developer from a heavy workload of screen-based interface resizing, and has a wider application coverage, higher adaptability, and stronger universality.

| Step A: measurement | Calculate a display size of each control and/or element on an interface, and restore a layout |
| Step B: layout | Determine a specific position range of each control and/or element based on information obtained through measurement, and perform layout classification and layout stretching |
| Step C: drawing | Draw each control and/or element on a canvas, construct a drawing instruction, and perform targeted processing such as maintaining a shape ratio and refilling and rearranging a multi-line text |
| Step D: rendering | Adjust brightness, contrast, saturation, and the like of a drawn layer |
| Step E: displaying | Display a rendered layer on a display |

FIG. 6B

## Description

This application claims priority to Chinese Patent Application No. 202210302733.5, filed with the China National Intellectual Property Administration on March 25, 2022 and entitled "ADAPTIVE INTERFACE DISPLAY METHOD AND TERMINAL DEVICE", which is incorporated herein by reference in its entirety.

## TECHNICAL FIELD

This application relates to the field of terminal technologies, and in particular, to an adaptive interface display method and a terminal device.

## BACKGROUND

With diversified development of personal electronic devices (such as a mobile phone, a tablet, a large screen, and a vehicle-mounted device), screen sizes (for example, aspect ratios) of terminal devices become increasingly diversified.

Generally, a layout of an interface like an application (application, app) interface (an application interface for short) is pre-developed. However, for terminal devices with screens of diversified sizes (for example, aspect ratios), layouts of a same interface (for example, an application interface) on a plurality of terminal devices may be different. In this case, some layouts may be unreasonable, such as insufficient content display and distorted images, which compromise user experience.

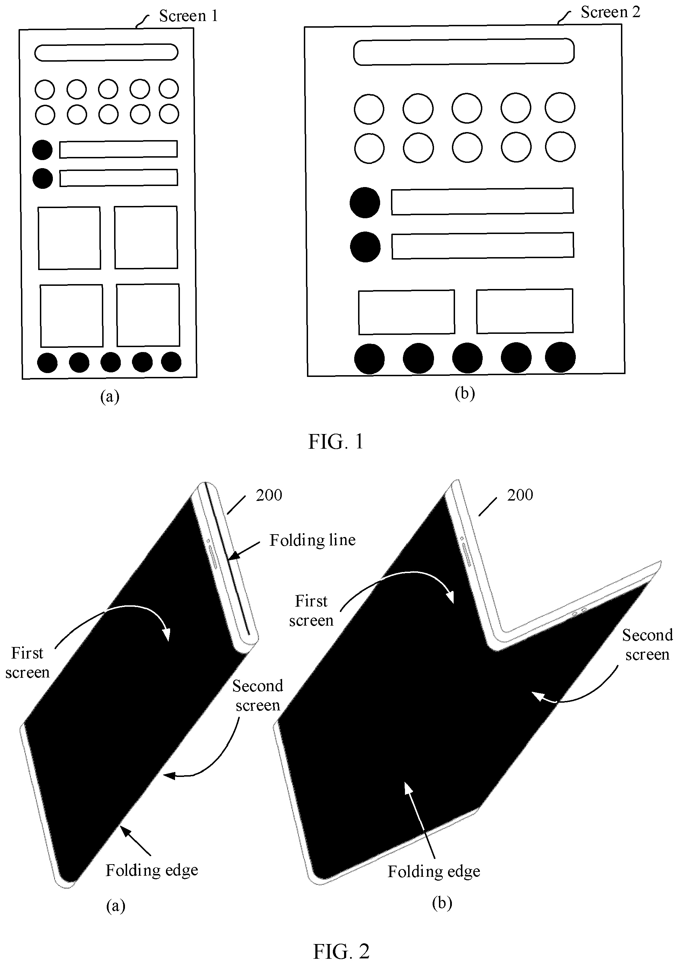

As shown in FIG. 1, when a same interface is displayed, because sizes of a screen 1 and a screen 2 are different, a layout of the interface on the screen 1 shown in (a) in FIG. 1 is different from a layout of the interface on the screen 2 shown in (b) in FIG. 1. As shown in (b) in FIG. 1, because a pre-developed interface layout does not adapt to the size of the screen 2, less content is displayed when the interface is laid out on the screen 2 shown in (b) in FIG. 1.

## SUMMARY

This application provides an adaptive interface display method and a terminal device, to enable a same interface to adapt to terminal devices with different aspect ratios.

To achieve the foregoing objective, the following technical solutions are used in embodiments of this application.

According to a first aspect, an adaptive interface display method is provided, where the method includes: A terminal device initially displays a first interface on a first screen, where a size of the first screen is a first size, and the first interface includes one or more controls and elements; after detecting that the screen size changes from the first size to a second size, the terminal device obtains a layout type of the control and a type of the element on the first interface; and the terminal device arranges and draws the control and the element on the first interface based on the layout type of the control and the type of the element by using a corresponding adaptive algorithm on a canvas of the second size.

For example, the control included in the first interface is a menu bar, a menu, a search box, or a search button. This is not limited in this application.

For example, the element included in the first interface is a child control, an icon, or a character (for example, a text). This is not limited in this application.

For example, the control included in the first interface further includes one or more elements.

According to the solution provided in the first aspect, when the screen size changes, the terminal device may use different policies such as stretching, translation, and alignment for different types of controls and elements on a to-be-displayed interface, to continuously display the interface on a changed screen by using an adapted layout. For example, when the screen size is larger, a problem that an amount of information displayed on the interface is less is avoided. For another example, when the screen size is smaller, a problem that information displayed on the interface is overcrowded is avoided. In addition, the method enables one interface that has been developed to adapt to terminal devices with different aspect ratios by using a general adaptive algorithm (for example, a free stretching algorithm, a proportional stretching algorithm, a grid equal division algorithm, an alignment algorithm, a translation algorithm, or a text control filling and rearrangement algorithm), which saves extra efforts of an application developer from a heavy workload of screen-based interface resizing, and has a wider application coverage, higher adaptability, and stronger universality.

In a possible implementation, the layout type of the control includes one or more of the following: a common layout, a grid layout, and a list layout. In the solution provided in this application, for different types of controls and elements on the to-be-displayed interface, for example, for a layout type like a common layout, a grid layout, or a list layout, the terminal device may use different policies such as stretching, translation, and alignment to adapt to a changed screen size, to obtain a more reasonable interface layout effect.

In a possible implementation, the first interface includes a first control, a layout type of the first control is a grid layout, and the first control includes a plurality of elements arranged at equal intervals; and that the terminal device arranges and draws the control and the element on the first interface based on the layout type of the control and the type of the element by using a corresponding adaptive algorithm on a canvas of the second size specifically includes: The terminal device stretches, based on a width-height stretch factor ($w_s$, $h_s$), a width and a height of a region corresponding to the first control by a corresponding multiple; the terminal device stretches, based on the width-height stretch factor ($w_s$, $h_s$), a width and a height of a control region occupied by the elements in the first control by a corresponding multiple; the terminal device proportionally stretches the elements in the first control based on a minimum value $min(w_s, h_s)$ of the width-height stretch factor; and the terminal device displays the elements in the first control in the center of a stretched control region occupied by the corresponding elements. The free stretching algorithm is used, so that it can be ensured that a control body of the grid layout adapts to the changed screen size. The proportional stretching algorithm is used, so that it can be ensured that elements in the grid are displayed in an original aspect ratio and are not distorted.

In a possible implementation, the first interface includes a second control, a layout type of the second control is a list layout, and the second control includes a plurality of elements presented in a dynamic loading manner; and that the terminal device arranges and draws the control and the element on the first interface based on the layout type of the control and the type of the element by using a corresponding adaptive algorithm on a canvas of the second size specifically includes: The terminal device stretches, based on the width-height stretch factor ($w_s$, $h_s$), a width and a height of a region corresponding to the second control by a corresponding multiple; the terminal device adjusts a quantity of rows and/or a quantity of columns of the elements in the second control based on the width-height stretch factor ($w_s$, $h_s$); and the terminal device displays, based on an adjusted quantity of rows and/or an adjusted quantity of columns, the elements in the second control in a stretched region corresponding to the second control. The free stretching algorithm is used, so that it can be ensured that the control body of the grid layout adapts to the changed screen size. A quantity of rows and/or a quantity of columns of elements in a list control are/is adaptively adjusted, so that it can be ensured that the elements in the list control are displayed in a reasonable layout that better adapts to the changed screen size.

In a possible implementation, the first interface includes a third control, and a layout type of the third control is a common layout; and that the terminal device arranges and draws the control and the element on the first interface based on the layout type of the control and the type of the element by using a corresponding adaptive algorithm on a canvas of the second size specifically includes: The terminal device stretches a width and a height of the third control by a corresponding multiple based on the width-height stretch factor. For controls that do not affect visual deformation, the free stretching algorithm may be used to adjust the controls to adapt to the changed screen size.

In a possible implementation, the first interface includes a preset icon; and that the terminal device arranges and draws the control and the element on the first interface based on the layout type of the control and the type of the element by using a corresponding adaptive algorithm on a canvas of the second size specifically includes: The terminal device proportionally stretches the preset icon based on the minimum value $min(w_s, h_s)$ of the width-height stretch factor. For controls or elements that may be visually distorted, the proportional stretching algorithm may be used to ensure that the controls or elements are displayed in an original aspect ratio and are not distorted.

In a possible implementation, the first interface includes a text box, and the text box includes a multi-line text; and that the terminal device arranges and draws the control and the element on the first interface based on the layout type of the control and the type of the element by using a corresponding adaptive algorithm on a canvas of the second size specifically includes: The terminal device stretches, based on the width-height stretch factor ($w_s$, $h_s$), a width and a height of the text box by a corresponding multiple; the terminal device calculates a layout manner of the multi-line text based on a stretched text box, where the layout manner represents a quantity of rows and a quantity of columns of the multi-line text; and the terminal device adjusts the height of the text box based on the layout manner of the multi-line text. Text control filling and rearrangement can avoid a problem that a text box and a text display size are uncoordinated or a screen display region is wasted due to mismatch between text re-layout and text box stretching caused by a screen size change.

In a possible implementation, the width-height stretch factor ($w_s$, $h_s$) represents a size relationship between the second size and the first size. For example, it is assumed that the first size indicates that a width is a and a height is b, and the second size indicates that a width is 2a and a height is b. In this case, the width-height stretch factor is (2a/a, b/b), that is, (2, 1). When a control or an element is adaptively stretched, a specific change degree of the screen size is considered, so that it can be ensured that the control or the element adapts to a changed screen size.

In a possible implementation, the first interface includes a fourth control and a fifth control, and when the terminal device displays the first interface on the first screen, the fourth control is aligned with the fifth control in a first alignment manner; and that the terminal device arranges and draws the control and the element on the first interface based on the layout type of the control and the type of the element by using a corresponding adaptive algorithm on a canvas of the second size specifically includes: The terminal device performs control stretching and element stretching separately based on layout types of the fourth control and the fifth control and types of elements in the controls by using the corresponding adaptive algorithm; and the terminal device adjusts a position of the fourth control and/or a position of the fifth control, so that the fourth control is aligned with the fifth control in the first alignment manner. According to the method, it can be ensured that a relative position relationship between a control and another control on an interface does not change, and a good interface visual effect is obtained.

In a possible implementation, the first alignment manner includes: left alignment, right alignment, or center alignment.

In a possible implementation, the terminal device is a foldable device, the first size is a screen size of the terminal device in a first state, and the second size is a screen size of the terminal device in a second state. The solution provided in this application may be applied to a foldable device, for example, applied to a scenario in which a foldable mobile phone switches from a folded state to an unfolded state, or applied to a scenario in which a foldable mobile phone switches from an unfolded state to a folded state, to avoid a problem of unreasonable interface display caused by a screen size change.

In a possible implementation, the first state is a folded state, the second state is an unfolded state, and the first size is less than the second size. For example, the solution provided in this application may be applied to a scenario in which a foldable device switches from a folded state to an unfolded state, to avoid a problem of unreasonable interface display caused by a screen size change.

According to a second aspect, a terminal device is provided, where the terminal device includes: a display, configured to display a first interface on a first screen when the terminal device is in a first state, where a size of the display is a first size when the terminal device is in the first state, and the first interface includes one or more controls and elements; a detection unit, configured to detect a status of the terminal device or a size change of the display; and a processing unit, configured to: after the detection unit detects that the screen size changes from the first size to a second size, obtain a layout type of the control and a type of the element on the first interface; and arrange and draw the control and the element on the first interface based on the layout type of the control and the type of the element by using a corresponding adaptive algorithm on a canvas of the second size.

For example, the detection unit may be configured to detect a status of the terminal device. Further, when the detection unit detects that the status of the terminal device changes, the processing unit may determine that the screen size changes from the first size to the second size.

For example, the detection unit may be configured to directly detect a size change of the display.

According to the solution provided in the second aspect, when the screen size changes, the terminal device may use different policies such as stretching, translation, and alignment for different types of controls and elements on a to-be-displayed interface, to continuously display the interface on a changed screen by using an adapted layout. For example, when the screen size is larger, a problem that an amount of information displayed on the interface is less is avoided. For another example, when the screen size is smaller, a problem that information displayed on the interface is overcrowded is avoided. In addition, the method enables one interface that has been developed to adapt to terminal devices with different aspect ratios by using a general adaptive algorithm (for example, a free stretching algorithm, a proportional stretching algorithm, a grid equal division algorithm, an alignment algorithm, a translation algorithm, or a text control filling and rearrangement algorithm), which saves extra efforts of an application developer from a heavy workload of screen-based interface resizing, and has a wider application coverage, higher adaptability, and stronger universality.

In a possible implementation, the layout type of the control includes one or more of the following: a common layout, a grid layout, and a list layout. In the solution provided in this application, for different types of controls and elements on the to-be-displayed interface, for example, for a layout type like a common layout, a grid layout, or a list layout, the terminal device may use different policies such as stretching, translation, and alignment to adapt to a changed screen size, to obtain a more reasonable interface layout effect.

In a possible implementation, the first interface includes a first control, a layout type of the first control is a grid layout, and the first control includes a plurality of elements arranged at equal intervals; and that the processing unit arranges and draws the control and the element on the first interface based on the layout type of the control and the type of the element by using the corresponding adaptive algorithm on the canvas of the second size specifically includes: The processing unit stretches, based on a width-height stretch factor $(w_s, h_s)$, a width and a height of a region corresponding to the first control by a corresponding multiple; the processing unit stretches, based on the width-height stretch factor $(w_s, h_s)$, a width and a height of a control region occupied by the elements in the first control by a corresponding multiple; the processing unit proportionally stretches the elements in the first control based on a minimum value $\min(w_s, h_s)$ of the width-height stretch factor; and the processing unit displays the elements in the first control in the center of a stretched control region occupied by the corresponding elements. The free stretching algorithm is used, so that it can be ensured that a control body of the grid layout adapts to the changed screen size. The proportional stretching algorithm is used, so that it can be ensured that elements in the grid are displayed in an original aspect ratio and are not distorted.

In a possible implementation, the first interface includes a second control, a layout type of the second control is a list layout, and the second control includes a plurality of elements presented in a dynamic loading manner; and that the processing unit arranges and draws the control and the element on the first interface based on the layout type of the control and the type of the element by using the corresponding adaptive algorithm on the canvas of the second size specifically includes: The processing unit stretches, based on the width-height stretch factor $(w_s, h_s)$, a width and a height of a region corresponding to the second control by a corresponding multiple; the processing unit adjusts a quantity of rows and/or a quantity of columns of the elements in the second control based on the width-height stretch factor $(w_s, h_s)$; and the

processing unit displays, based on an adjusted quantity of rows and/or an adjusted quantity of columns, the elements in the second control in a stretched region corresponding to the second control. The free stretching algorithm is used, so that it can be ensured that the control body of the grid layout adapts to the changed screen size. A quantity of rows and/or a quantity of columns of elements in a list control are/is adaptively adjusted, so that it can be ensured that the elements in the list control are displayed in a reasonable layout that better adapts to the changed screen size.

In a possible implementation, the first interface includes a third control, and a layout type of the third control is a common layout; and that the processing unit arranges and draws the control and the element on the first interface based on the layout type of the control and the type of the element by using the corresponding adaptive algorithm on the canvas of the second size specifically includes: The processing unit stretches a width and a height of the third control by a corresponding multiple based on the width-height stretch factor. For controls that do not affect visual deformation, the free stretching algorithm may be used to adjust the controls to adapt to the changed screen size.

In a possible implementation, the first interface includes a preset icon; and that the processing unit arranges and draws the control and the element on the first interface based on the layout type of the control and the type of the element by using the corresponding adaptive algorithm on the canvas of the second size specifically includes: The processing unit proportionally stretches the preset icon based on the minimum value $\min(w_s, h_s)$ of the width-height stretch factor. For controls or elements that may be visually distorted, the proportional stretching algorithm may be used to ensure that the controls or elements are displayed in an original aspect ratio and are not distorted.

In a possible implementation, the first interface includes a text box, and the text box includes a multi-line text; and that the processing unit arranges and draws the control and the element on the first interface based on the layout type of the control and the type of the element by using the corresponding adaptive algorithm on the canvas of the second size specifically includes: The processing unit stretches, based on the width-height stretch factor $(w_s, h_s)$, a width and a height of the text box by a corresponding multiple; the processing unit calculates a layout manner of the multi-line text based on a stretched text box, where the layout manner represents a quantity of rows and a quantity of columns of the multi-line text; and the processing unit adjusts the height of the text box based on the layout manner of the multi-line text. Text control filling and rearrangement can avoid a problem that a text box and a text display size are uncoordinated or a screen display region is wasted due to mismatch between text re-layout and text box stretching caused by a screen size change.

In a possible implementation, the width-height stretch factor $(w_s, h_s)$ represents a size relationship between the second size and the first size. For example, it is assumed that the first size indicates that a width is a and a height is b, and the second size indicates that a width is 2a and a height is b. In this case, the width-height stretch factor is (2a/a, b/b), that is, (2, 1). When a control or an element is adaptively stretched, a specific change degree of the screen size is considered, so that it can be ensured that the control or the element adapts to a changed screen size.

In a possible implementation, the first interface includes a fourth control and a fifth control, and when the terminal device displays the first interface on the first screen, the fourth control is aligned with the fifth control in a first alignment manner; and that the processing unit arranges and draws the control and the element on the first interface based on the layout type of the control and the type of the element by using the corresponding adaptive algorithm on the canvas of the second size specifically includes: The processing unit performs control stretching and element stretching separately based on layout types of the fourth control and the fifth control and types of elements in the controls by using the corresponding adaptive algorithm; and the processing unit adjusts a position of the fourth control and/or a position of the fifth control, so that the fourth control is aligned with the fifth control in the first alignment manner. According to the method, it can be ensured that a relative position relationship between a control and another control on an interface does not change, and a good interface visual effect is obtained.

In a possible implementation, the first alignment manner includes: left alignment, right alignment, or center alignment.

In a possible implementation, the terminal device is a foldable device, and the second size is a screen size of the terminal device in a second state. The solution provided in this application may be applied to a foldable device, for example, applied to a scenario in which a foldable mobile phone switches from a folded state to an unfolded state, or applied to a scenario in which a foldable mobile phone switches from an unfolded state to a folded state, to avoid a problem of unreasonable interface display caused by a screen size change.

In a possible implementation, the first state is a folded state, the second state is an unfolded state, and the first size is less than the second size. For example, the solution provided in this application may be applied to a scenario in which a foldable device switches from a folded state to an unfolded state, to avoid a problem of unreasonable interface display caused by a screen size change.

According to a third aspect, a terminal device is provided. The terminal device includes: a communication interface, configured to send and receive a radio signal; a display, configured to display an interface (for example, a first interface); a memory, configured to store computer program instructions; and a processor, configured to execute the computer program instructions, to support the terminal device in implementing the method in any possible implementation of the first aspect.

According to a fourth aspect, a computer-readable storage medium is provided. The computer-readable storage medium stores computer program instructions. When the computer program instructions are executed by a processor, the method in any possible implementation of the first aspect is implemented.

According to a fifth aspect, a chip system is provided. The chip system includes a processor and a memory. The memory stores computer program instructions, and when the computer program instructions are executed by the processor, the method in any possible implementation of the first aspect is implemented. The chip system may include a chip, or may include a chip and another discrete component.

**BRIEF DESCRIPTION OF DRAWINGS**

FIG. 1 is a diagram of a conventional interface display effect;
FIG. 2 is a diagram of a form of a foldable terminal according to an embodiment of this application;
FIG. 3 is a diagram of an application scenario according to an embodiment of this application;
FIG. 4 is a diagram of a hardware structure of a terminal device according to an embodiment of this application;
FIG. 5 is a block diagram of a software structure of a terminal device according to an embodiment of this application;
FIG. 6A is a diagram of a conventional interface display process;
FIG. 6B is a diagram of an interface display process according to an embodiment of this application;
FIG. 7 is a diagram of another interface display process according to an embodiment of this application;
FIG. 8 is a diagram of a conventional application interface display process;
FIG. 9 is a diagram of an application interface display process according to an embodiment of this application;
FIG. 10 is an example diagram of a control parameter according to an embodiment of this application;
FIG. 11 is a flowchart of an adaptive interface display method according to an embodiment of this application;
FIG. 12 is a diagram of an interface including a plurality of controls according to an embodiment of this application;
FIG. 13 is a diagram of an example of control stretching according to an embodiment of this application;
FIG. 14(a) and FIG. 14(b) are a diagram of an adaptive interface display effect according to an embodiment of this application;
FIG. 15 is a diagram of an adaptive adjustment process of controls in a grid layout according to an embodiment of this application;
FIG. 16(a) and FIG. 16(b) are a diagram of another adaptive interface display effect according to an embodiment of this application;
FIG. 17 is a diagram of a multi-line text filling and rearrangement process according to an embodiment of this application; and
FIG. 18 is a block diagram of a structure of a terminal device according to an embodiment of this application.

**DESCRIPTION OF EMBODIMENTS**

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In embodiments of this application, an interface may include but is not limited to an application interface, an applet interface, a function interface, and the like. It may be understood that layouts of interfaces such as the application interface, the applet interface, and the function interface are usually developed in advance. For example, the application interface and the applet interface are usually developed in advance by an application developer, for example, developed in advance according to a mainstream aspect ratio of a terminal device in the market. For another example, the function interface is usually developed in advance by an operating system developer, for example, developed in advance according to a mainstream aspect ratio of a terminal device in the market.

To enable an interface to be properly displayed on terminal devices with different aspect ratios, in a possible implementation, a manner of developing a plurality of corresponding interface layouts for a plurality of aspect ratios may be used. However, the foregoing targeted adaptation has a heavy workload and a long period, can be performed only for an existing terminal device, and therefore is delayed.

For the foregoing problem existing in the conventional technology, embodiments of this application provide an adaptive interface display method. In the method, different policies such as stretching, translation, and alignment are used for different types of controls on an interface, to adapt to a screen size. The method enables one interface that has been developed to adapt to terminal devices with different aspect ratios, to improve user experience.

In a possible case, the adaptive interface display method provided in embodiments of this application may be applied to a scenario in which a foldable terminal switches from a folded state to an unfolded state, or applied to a scenario in which a foldable terminal switches from an unfolded state to a folded state.

For example, the foldable terminal is a flexible foldable terminal. The foldable terminal may include an outward foldable terminal and an inward foldable terminal. A touchscreen of the outward foldable terminal may be folded into a first screen and a second screen along a folding edge, and the first screen and the second screen of the folded foldable terminal face outward. The inward foldable terminal may include an outer screen and an inner screen. After the inward foldable terminal is folded along a folding edge, the folded inward foldable terminal includes an outward-facing outer screen and a folded inner screen. After the inward foldable terminal is unfolded along the folding edge, one surface of the unfolded inward foldable terminal includes the outer screen, and the other surface includes an unfolded inner screen. Generally, a size of the inner screen of the inward foldable terminal is greater than a size of the outer screen.

The outward foldable terminal is used as an example. After the foldable terminal switches from a folded state to an unfolded state, a size of a screen usually increases. After the foldable terminal switches from the unfolded state to the folded state, the size of the screen usually decreases. Further, in some cases, after the foldable terminal switches from the folded state to the unfolded state, and after the foldable terminal switches from the unfolded state to the folded state, an aspect ratio of the screen usually changes.

For example, FIG. 2 is a diagram of a form of foldable terminal according to an embodiment of this application by using a foldable mobile phone 200 as an example, (a) in FIG. 2 is a diagram of a form of the mobile phone 200 after being folded along a folding edge. As shown in (a) in FIG. 2, the mobile phone 200 may be folded into a first screen and a second screen after being folded along the folding edge. (b) in FIG. 2 is a diagram of a form of the mobile phone 200 after being unfolded (semi-unfolded) along the folding edge. Refer to (b) in FIG. 2. After the mobile phone 200 is unfolded along the folding edge, the first screen and the second screen form a screen. Black regions shown in (a) in FIG. 2 and (b) in FIG. 2 are screens of the mobile phone 200. As shown in FIG. 2, after the mobile phone 200 switches from a folded state shown in (a) in FIG. 2 to an unfolded (semi-unfolded) state shown in (b) in FIG. 2, a size of the screen changes (is wider), and an aspect ratio of the screen changes (is larger).

In another possible case, the adaptive interface display method provided in embodiments of this application may be applied to a cross-device interface projection scenario (for example, a scenario in which a first device projects a screen to a second device). Screen sizes of the first device and the second device are different.

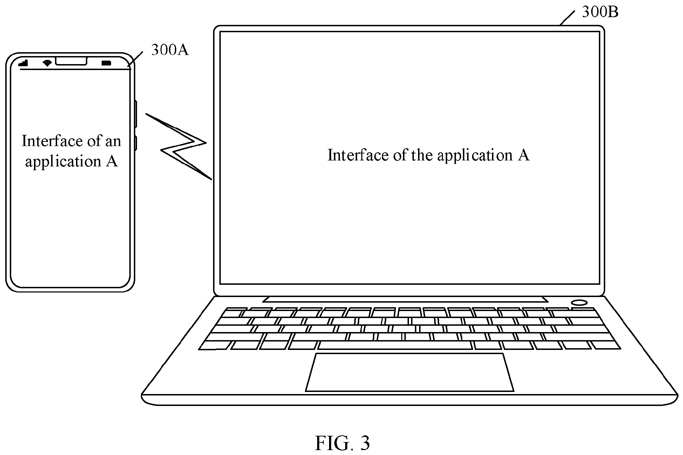

For example, as shown in FIG. 3, the adaptive interface display method provided in embodiments of this application may be applied to a scenario in which a mobile phone 300A (namely, the first device) projects an interface of an application A to a notebook computer 300B (namely, the second device) shown in FIG. 3. A communication connection is established between the mobile phone 300A and the notebook computer 300B shown in FIG. 3. As shown in FIG. 3, after the interface of the application A is projected from the mobile phone 300A to the notebook computer 300B, a size of a screen for displaying the interface of the application A changes (is longer and wider), and an aspect ratio of the screen changes (is larger).

For another example, the adaptive interface display method provided in embodiments of this application may be applied to an interface projection scenario in an in-vehicle background. For example, the first device is a driver screen device in a vehicle, and the second device is a front passenger display device or a rear display device. The driver screen device may perform interface projection to the front passenger display device and/or the rear display device.

In embodiments of this application, the terminal device may include but is not limited to a smartphone (for example, a foldable mobile phone), a netbook, a tablet computer, a vehicle-mounted device, a wearable device (for example, a smartwatch, a smart band, or smart glasses), a camera (for example, a single-lens reflex camera or a card camera), a personal computer (personal computer, PC), a palmtop computer, a smart television, a personal digital assistant (personal digital assistant, PDA), a portable multimedia player (portable multimedia player, PMP), a projection device, a smart screen device, an augmented reality (augmented reality, AR) device/a virtual reality (virtual reality, VR) device, a mixed reality (mixed reality, MR) device, a television, a somatosensory game console in a human-computer interaction scenario, or the like. A specific function and structure of the terminal device are not limited in this application.

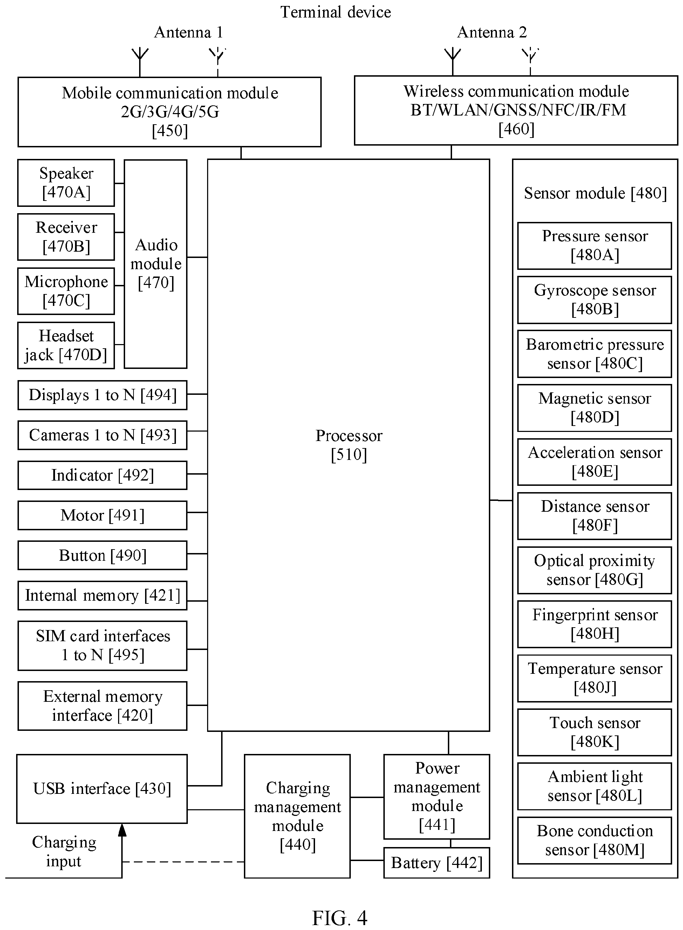

In an example, FIG. 4 is a diagram of a hardware structure of a terminal device according to an embodiment of this application by using a foldable mobile phone as an example. As shown in FIG. 4, the terminal device may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

It may be understood that, a structure illustrated in embodiments of this application does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by using hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), an audio processor/digital processor (audio processor), a controller, a memory, a video codec, an audio codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device. The controller may generate an operation control signal based on an operation code of a user operation instruction and a time sequence signal, to complete control of instruction reading and instruction execution. For example, a memory may be further disposed in the processor 410, and is configured to store instructions and data. In some embodiments, the memory in the processor 410 is a cache memory. The memory may store instructions or data just used or cyclically used by the processor 410. If the processor 410 needs to use the instructions or data again, the processor 410 may directly invoke the instructions or data from the memory. This avoids repeated access and reduces waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identification module interface, a universal serial bus interface, and/or the like.

The I2C interface is a bidirectional synchronization serial bus, and includes one serial data line (serial data line, SDA) and one serial clock line (serial clock line, SCL). In some embodiments, the processor 410 may include a plurality of groups of I2C buses. The processor 410 may be separately coupled to the touch sensor 480K, a microphone, the camera 493, and the like through different I2C bus interfaces. For example, the processor 410 may be coupled to the touch sensor 480K through the I2C interface, so that the processor 410 communicates with the touch sensor 480K through the I2C bus interface, to implement a touch function of the terminal device.

It should be understood that an interface connection relationship between modules illustrated in embodiments of this application is merely an illustrative description, and does not constitute a limitation on a structure of the terminal device. In some other embodiments of this application, the terminal device may alternatively use an interface connection manner different from that in the foregoing embodiment, or use a combination of a plurality of interface connection manners.

The charging management module 440 is configured to receive a charging input from a charger. The power management module 441 is configured to connect the battery 442, the charging management module 440, and the processor 410. The power management module 441 receives an input of the battery 442 and/or the charging management module 440, to supply power to the processor 410, the internal memory 421, an external memory, the display 494, the camera 493, the wireless communication module 463, and the like.

A wireless communication function of the terminal device may be implemented through the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. The mobile communication module 450 may provide a wireless communication solution that is applied to the terminal device and that includes 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The wireless communication module 460 may provide a wireless communication solution that is applied to the terminal device and that includes a wireless local area network (wireless local area network, WLAN) (for example, a wireless fidelity (wireless fidelity, Wi-Fi) network), Bluetooth (Bluetooth, BT), a BeiDou navigation satellite system (BeiDou navigation satellite system, BDS), a global navigation satellite system (global navigation satellite system, GNSS), frequency modulation (frequency modulation, FM), a near field communication (near field communication, NFC) technology, an infrared (infrared, IR) technology, or the like.

The terminal device implements a display function by using the graphics processing unit (graphics processing unit, GPU), the display 494, the application processor, and the like. The GPU is a microprocessor for image processing, and is connected to the display 494 and the application processor. The GPU is configured to perform data and geometric computation for graphic rendering. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like.

In embodiments of this application, the display 494 may be configured to display an interface (for example, an application interface, an applet interface, or a function interface).

The terminal device may implement an image shooting function by using the image signal processor (image signal processor, ISP), the camera 493, the video codec, the GPU, the display 494, the application processor, and the like. In this application, the camera 493 may include a front-facing camera and a rear-facing camera of the terminal device, and may be an optical zoom lens or the like. This is not limited in this application.

The external memory interface 420 may be configured to connect to an external storage card, for example, a micro SD card, to expand a storage capability of the terminal device. The external storage card communicates with the processor 410 through the external memory interface 420, to implement a data storage function. For example, files such as audios or videos are stored in the external storage card.

The internal memory 421 may be configured to store executable program code of a computer program. For example, the computer program may include an operating system program and an application program. The operating system may include but is not limited to operating systems such as Symbian® (Symbian®), Android® (Android®), Microsoft® Windows®, Apple iOS®, Blackberry® (Blackberry®), and Harmony® (Harmony®) OS. The executable program code includes instructions. The processor 410 runs the instructions stored in the internal memory 421, to perform various function applications and data processing of the terminal device. The internal memory 421 may include a program storage region and a data storage region. The program storage region may store an operating system, and an application required by at least one function (for example, an audio playing function or an image playing function). The data storage region may store data (for example, application data or user data) created when the terminal device is used, and the like. In addition, the internal memory 421 may include a high-speed random access memory, and may further include a nonvolatile memory, for example, at least one magnetic disk storage device, a flash memory, or a universal flash storage (universal flash storage, UFS).

The terminal device may implement an audio function, for example, audio playing and recording, by using the audio module 470, the speaker 470A, the receiver 470B, the microphone 470C, the headset jack 470D, the application processor, and the like.

The touch sensor 480K is also referred to as a "touch panel". The touch sensor 480K may be disposed on the display 494. The touch sensor 480K and the display 494 form a touchscreen, which is also referred to as a "touch screen". The touch sensor 480K is configured to detect a touch operation performed on or near the touch sensor. The touch sensor may transfer a detected touch operation (including information such as a touch position, touch strength, a contact area, and touch duration) to the processor (for example, the DSP), to determine a touch event type. A visual output related to the touch operation may be provided on the display 494. In some other embodiments, the touch sensor 480K may alternatively be disposed on a surface of the terminal device at a position different from that of the display 494.

For example, in embodiments of this application, the terminal device may detect, by using the touch sensor 480K, an operation performed by the user to indicate to open an application/applet/function, an operation performed by the user on an application/applet/function interface, and the like.

It may be understood that, a structure illustrated in embodiments of this application does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by using hardware, software, or a combination of software and hardware.

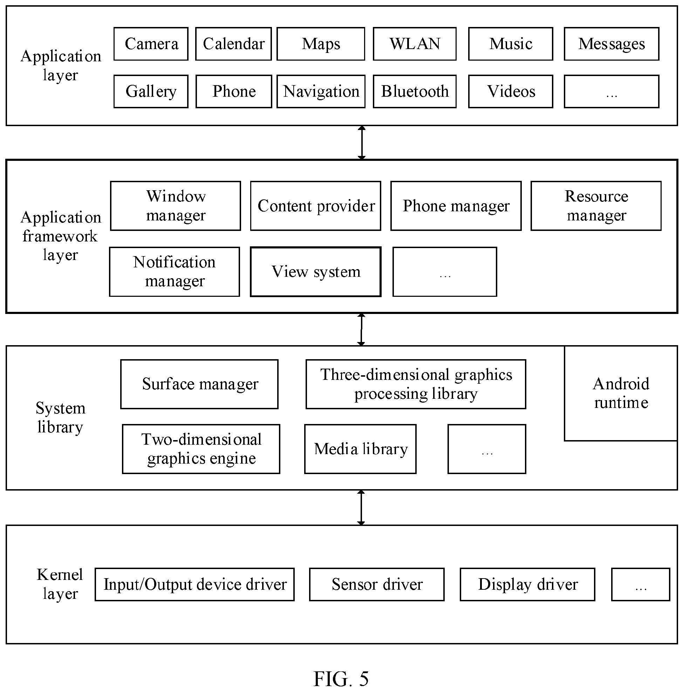

FIG. 5 is a block diagram of a software structure of a terminal device according to an embodiment of this application by using an Android® system as an example. For example, the software may be divided into several layers based on a layered architecture, and each layer has a clear role and task. The layers communicate with each other through a software interface. In some embodiments, as shown in FIG. 5, the Android® system may be divided into an application layer, an application framework (Framework) layer, an Android runtime (Android runtime) and a system library, and a kernel layer from top to bottom based on a layered architecture.

The application layer may include a series of applications. As shown in FIG. 5, applications such as Camera, Gallery, Calendar, Phone, Maps, Navigation, WLAN, Bluetooth, Music, Videos, and Messages may be included. The application shown in FIG. 5 is merely used as an example, and the application may alternatively be a third-party application.

The application framework (Framework) layer is configured to provide an application programming interface (application programming interface, API) and a programming framework for an application at the application layer. The application framework layer includes some predefined functions. As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and received, a browsing history, a bookmark, an address book, and the like.

The view system includes visual controls such as a control for displaying a text and a control for displaying an image. The view system may be configured to construct an application interface. A display interface may include one or more views. For example, a display interface including an SMS message notification icon may include a text display view and an image display view.

The phone manager is configured to provide a communication function of the terminal device, for example, management of a call status (including answering, declining, or the like).

The resource manager provides various resources such as a localized character string, an icon, an image, a layout file, and a video file for an application.

The notification manager enables an application to display notification information in the status bar, may be configured to convey a notification message, and may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is displayed in the status bar, an announcement is given, the device vibrates, or the indicator light blinks.

The Android runtime includes a kernel library and a virtual machine. The Android® runtime is responsible for scheduling and management of the Android® system.

The kernel library includes two parts: a function that needs to be called in Java language and a kernel library of Android®.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between a hardware layer and the foregoing software layer. The kernel layer may include a display driver, an input/output device driver (for example, a driver for a keyboard, a touchscreen, a headset, a speaker, or a microphone), a camera driver, an audio driver, a sensor driver, and the like. The user performs an input operation by using an input device (for example, a touchscreen, a keyboard, or a microphone), and the kernel layer may generate a corresponding input event based on the input operation.

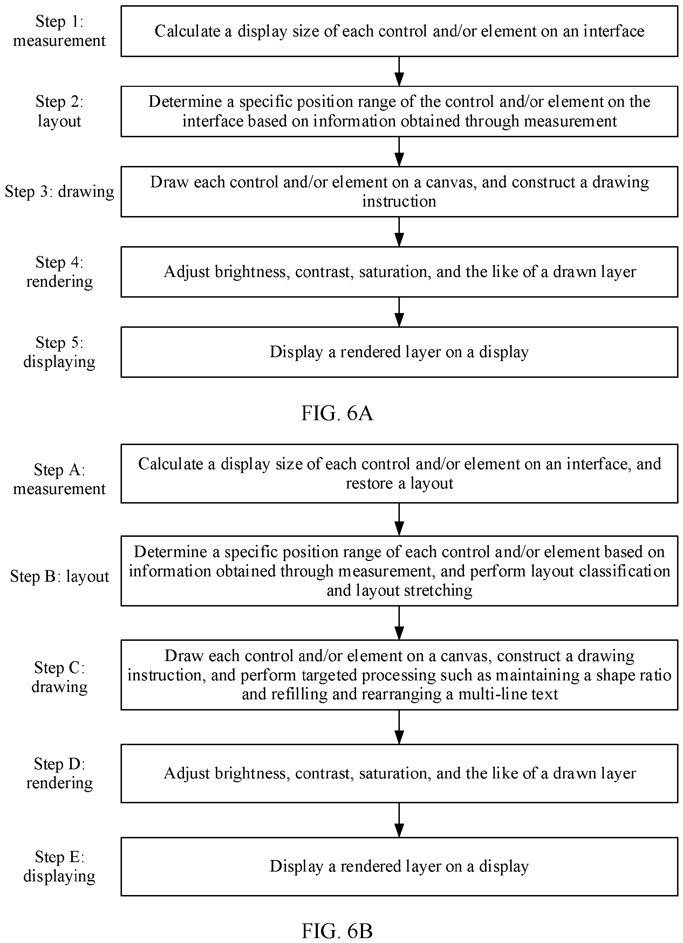

Generally, as shown in FIG. 6A, the following step 1 to step 5 need to be performed for display of an interface.

Step 1 is measurement, which is used to calculate a display size of each control and/or element on the interface, for example, obtain and save a size of a control and/or a size of an element on the interface according to settings of control and/or element attributes in an xml layout file and code of an application.

For example, the element on the interface is a child control, an icon, or a character (for example, a text). This is not limited in this application. For example, the control is a menu bar, a menu, a search box, or a search button. This is not limited in this application.

Step 2 is layout, which is used to determine a specific position range of the control and/or element on the interface based on information obtained through measurement.

Step 3 is drawing, which is used to: draw each control and/or element on a canvas (canvas) after the position range of the control and/or element on the interface is determined, and construct a drawing instruction.

Step 4 is rendering, which is used to adjust brightness, contrast, saturation, and the like of a drawn layer.

Step 5 is displaying, which is used to display a rendered layer on a display.

To support the adaptive interface display method provided in embodiments of this application, as shown in FIG. 6B, the following step A to step E need to be performed for display of an interface.

Step A: measurement.

Compared with that in a conventional technology, as shown in FIG. 6B, in addition to calculating a display size of each control and/or element on the interface, the measurement phase is further used to perform layout restoration.

For example, in the measurement phase, a terminal device may modify a screen size-related parameter, for example, modify the parameter to an initial size, so that a system considers that the interface is to be displayed on a screen of the initial size.

The initial size is, for example, an original screen size predefined during application/applet/function development. Alternatively, the initial size is, for example, a screen size used when an application/applet/function interface is displayed last time (for example, before folding, before unfolding, or before projection). This is not specifically limited in this application.

Step B: layout.

Compared with that in the conventional technology, as shown in FIG. 6B, in addition to determining a specific position range of each control and/or element based on information obtained through measurement, the layout phase is further used to perform layout classification and layout stretching.

The layout classification refers to identifying and classifying a layout type of each control and/or element on a current interface, to determine a subsequent stretching policy. The layout stretching refers to executing an adaptive policy like stretching, alignment, or translation based on a layout type classification result, and invoking a corresponding adaptive algorithm to modify a position, a size, an alignment manner, and the like of the control and/or element.

In an example, the adaptive algorithm and the like may be preset in an operating system, for example, preset in an application framework layer of the terminal device.

Step C: drawing.

In some embodiments, the drawing phase is used to: draw each control and/or element on a canvas (canvas) after the position range of the control and/or element on the interface is determined, and construct a drawing instruction.

In some other embodiments, as shown in FIG. 6B, the drawing phase is further used to perform targeted processing such as maintaining a shape ratio and filling and rearranging a multi-line text on a special element. For example, the special element is a control including multi-line text content, or a control including a special shape.

Step D: rendering.

The rendering phase is used to adjust brightness, contrast, saturation, and the like of a drawn layer.

Step E: displaying.

The displaying phase is used to display a rendered layer on a display.

It may be understood that, in the adaptive interface display method provided in embodiments of this application, measurement and layout phases are improved, so that different policies such as stretching, translation, and alignment are used for different types of controls on an interface, to adapt to a screen size, and implement an effect that a same interface adapts to terminal devices with different aspect ratios.

Further, in some embodiments, in the adaptive interface display method provided in embodiments of this application, the drawing phase may be further improved, to implement filling and rearrangement of elements such as a control including multi-line text content and a list-type control, thereby implementing a more friendly interface display effect.

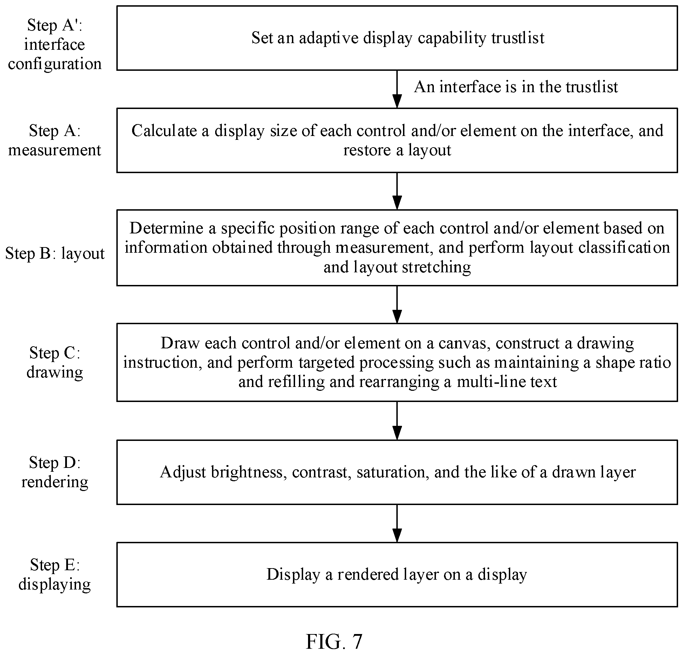

In some embodiments, to manage an adaptive interface display capability based on an application/applet/function granularity, as shown in FIG. 7, an interface display process further includes step A'.

Step A': interface configuration.

The interface configuration phase is used to set an adaptive display capability trustlist. For example, if an application/applet/function is set in the adaptive display capability trustlist, the application/applet/function may perform step A to step E shown in FIG. 7 to perform adaptive interface display. If the application/applet/function is not set in the adaptive display capability trustlist, or is set in an adaptive display capability blocklist, the application/applet/function performs step A to step E shown in FIG. 6B to display an interface.

In a possible implementation, the foregoing step A to step E may be implemented based on an application framework layer (the view system shown in FIG. 5) of a terminal device. For specific processes and descriptions of measurement, layout, drawing, rendering, and displaying, refer to explanations and descriptions in a conventional technology. Details are not described in this application.

With reference to the accompanying drawings, the following describes in detail the adaptive interface display method provided in embodiments of this application.

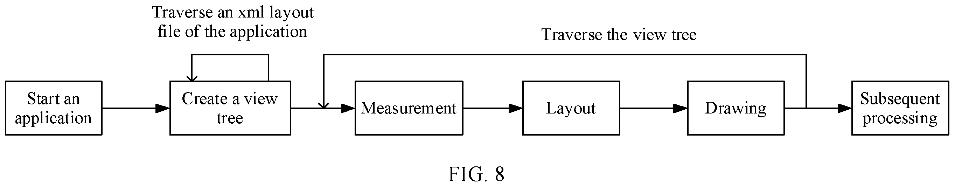

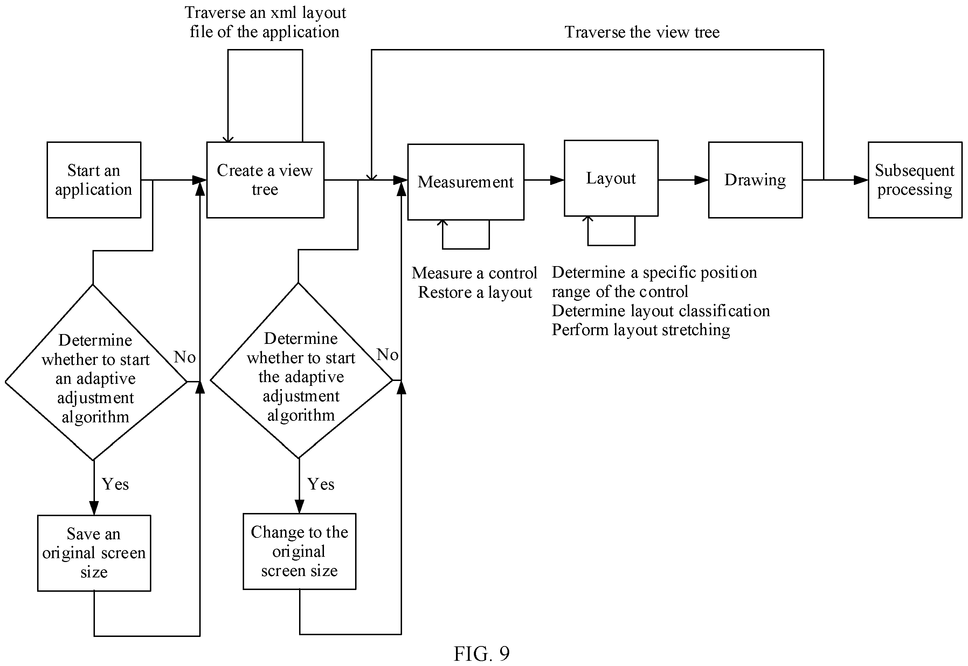

For example, the interface is an application interface. FIG. 8 and FIG. 9 show a comparison effect between a conventional application interface display process and an application interface display process provided in embodiments of this application when a size of a display screen changes.

FIG. 8 is a diagram of the conventional application interface display process. As shown in FIG. 8, after an application is started, a terminal device first creates a view tree (ViewTree (also referred to as Tree View)). For example, an application creates a view tree (ViewTree) by traversing an xml layout file of the application. Then, the terminal device traverses the view tree (ViewTree) to perform measurement, layout, drawing, and subsequent processing (such as rendering and displaying) on each control in the view tree (ViewTree).

The ViewTree is a tree structure formed by combining and nesting different View components (ViewItems) and/or View groups (ViewGroups). A ViewItem or a ViewGroup in the ViewTree is used to present a control or an element on a ViewTree user interface (user interface, UI) (a UI interface for short). The ViewGroup may contain a group of ViewItems and/or ViewGroups, and the ViewGroup is an extension of a View. The ViewItem or the ViewGroup is customized and preset based on an actual application interface requirement. For example, the ViewItem is a statically defined tree, a dynamically constructed tree, or a data-bound tree. This is not limited in this application. For example, the ViewItem is used to present a menu, a search button, an icon, a character (for example, a text), and the like on the UI. The ViewGroup is used to present a menu bar, a search bar, a text box, and the like on the UI.

Generally, the ViewTree includes three basic component types: a root component, a parent component, and a leaf component. The root component is a top-level parent node in the ViewTree. The root component is a node that has a child node and whose Parent attribute value is empty in the ViewTree. The parent component is a specific node in the ViewTree, and the parent component has a child node. The leaf component is a node that does not have a child node in the ViewTree. For example, the root component is used to present the menu bar on the UI, the parent component is used to present a menu in the menu bar, and the leaf component is used to present a text corresponding to the menu.

Generally, a position and a size of a control are mainly represented by a parameter A, a parameter B, a parameter C, and a parameter D.

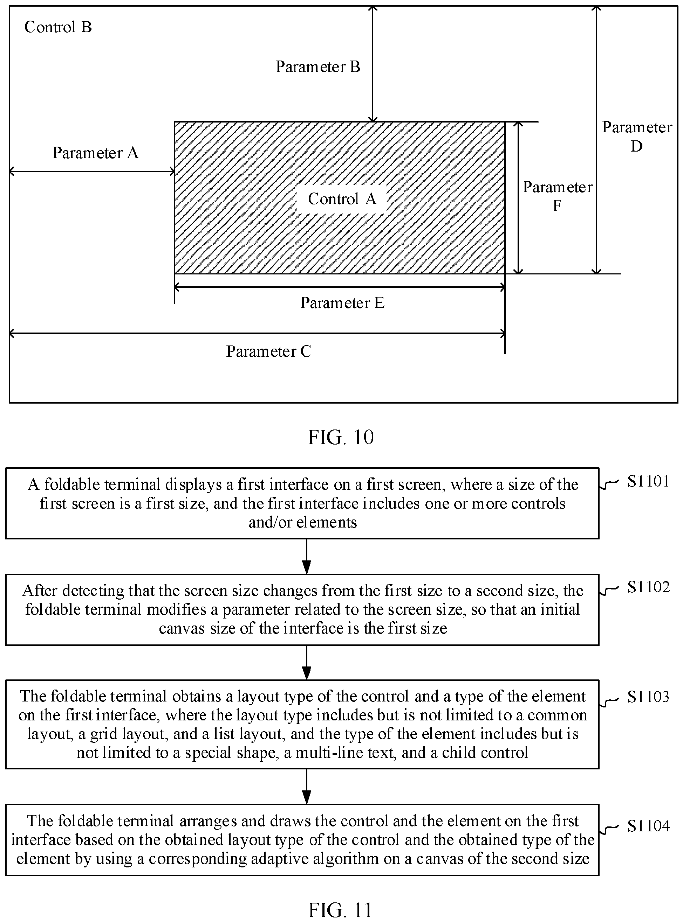

For example, a current control is a control A, and the control A is a child node of a control B. As shown in FIG. 10, the parameter A indicates a distance between a leftmost end of a layoutable region of the current control and a leftmost end of a parent component, and the parameter A is, for example, a left parameter. The parameter B indicates a distance between the top of the layoutable region of the current control and the top of the parent component, and the parameter B is, for example, a top parameter. The parameter C indicates a distance between a rightmost end of the layoutable region of the current control and the leftmost end of the parent component, and the parameter C is, for example, a right parameter. The parameter D indicates a distance between the bottom of the layoutable region of the current control and the top of the parent component, and the parameter D is, for example, a bottom parameter. As shown in FIG. 10, a rectangular region described by (the parameter A, the parameter B, the parameter C, and the parameter D) is a region in which the current control A can be laid out in the parent component (namely, the control B).

In some embodiments, a position and a size of a control may alternatively be represented by the parameter A, the parameter B, a parameter E, and a parameter F. As shown in FIG. 10, the parameter E indicates a width of a current control, and the parameter E is, for example, a width parameter. The parameter F indicates a height of the current control, and the parameter F is, for example, a height parameter.

In some other embodiments, a position and a size of a control may alternatively be represented by the parameter C, the parameter D, the parameter E, and the parameter F.

In some other embodiments, a position and a size of a control may alternatively be represented by the parameter A, the parameter D, the parameter E, and the parameter F.

In some other embodiments, a position and a size of a control may alternatively be represented by the parameter C, the parameter B, the parameter E, and the parameter F.

Herein, width = right - left, that is, parameter E = parameter C - parameter A; and height = bottom - top, that is, parameter F = parameter D - parameter B.

Compared with the conventional application interface display process shown in FIG. 8, as shown in FIG. 9, the application interface display method provided in embodiments of this application may include the following steps.

First, after an application is started, a terminal device creates a view tree (ViewTree). For example, an application creates a view tree (ViewTree) by traversing an xml layout file of the application.

Then, the terminal device traverses the view tree (ViewTree) to perform control measurement and layout restoration on each control in the view tree (ViewTree), so that a system considers that an interface is to be displayed on a screen of an initial size.

Then, the terminal device determines a specific position range of the control, determines layout classification, and performs layout stretching. For example, the terminal device may determine, by analyzing a type, a size, a layout parameter, and the like of each node in the view tree (ViewTree), an adaptive scenario and a stretch factor corresponding to each node. Further, the terminal device may perform adaptive adjustment on a corresponding node based on the determined adaptive scenario and stretch factor, including modification of a position, a size, an alignment manner, and the like.

Finally, the terminal device draws an interface and performs subsequent processing (such as rendering and displaying).

In some embodiments, after the application is started, the terminal device may further determine whether to execute an adaptive interface procedure, that is, determine whether to start an adaptive adjustment algorithm.

For example, as shown in FIG. 9, after the application is started, the terminal device may determine whether to start the adaptive adjustment algorithm. If it is determined to start the adaptive adjustment algorithm, the terminal device saves a screen size obtained before the screen size changes (an original screen size for short), and performs a subsequent step of creating a view tree (ViewTree); or if it is determined not to start the adaptive adjustment algorithm, the terminal device performs a subsequent step of creating a view tree (ViewTree).

Further, as shown in FIG. 9, after the view tree (ViewTree) is successfully created, the terminal device may determine again whether to start the adaptive adjustment algorithm. If it is determined to start the adaptive adjustment algorithm, the terminal device modifies a screen size-related parameter to the original screen size, and performs a subsequent step of traversing the view tree (ViewTree) to perform measurement; or if it is determined not to start the adaptive adjustment algorithm, the terminal device performs a subsequent step of traversing the view tree (ViewTree) to perform measurement.

In an example, the terminal device may determine to execute the adaptive interface procedure when the screen size (for example, a screen aspect ratio) changes.

In another example, the terminal device may determine to execute the adaptive interface procedure when the screen size (for example, a screen aspect ratio) changes and an application/applet/function to which a current interface belongs is in an adaptive display capability trustlist.

In another example, the terminal device may determine to execute the adaptive interface procedure when the screen size (for example, a screen aspect ratio) changes and an application/applet/function to which a current interface belongs is not in an adaptive display capability blocklist.

For example, a screen of a foldable terminal switches from a folded state to an unfolded state. It is assumed that at an initial moment, the foldable terminal in the folded state displays an interface on the folded screen. After the screen switched from the folded state to the unfolded state, the foldable terminal performs the adaptive interface display method provided in embodiments of this application, to adaptively display the interface on the unfolded screen.

For example, a screen of a foldable terminal switches from an unfolded state to a folded state. It is assumed that at an initial moment, the foldable terminal in the unfolded state displays an interface on the unfolded screen. After the screen switched from the unfolded state to the folded state, the foldable terminal performs the adaptive interface display method provided in embodiments of this application, to adaptively display the interface on the folded screen.

For example, a screen of a foldable terminal switches from a folded state to an unfolded state, or switches from an unfolded state to a folded state. As shown in FIG. 11, an adaptive interface display method provided in embodiments of this application may include the following S1101 to S1104.

S1101: The foldable terminal displays a first interface on a first screen, where a size of the first screen is a first size, and the first interface includes one or more controls and/or elements.

The first interface may be an application interface (including a light application, a quick application, and the like), an applet interface, a function interface, or the like. This is not limited in this application.

For example, the element is a child control, an icon (icon), or a character (for example, a text). This is not limited in this application. For example, the child control is a menu bar, a menu, a search box, or a search button. This is not limited in this application.

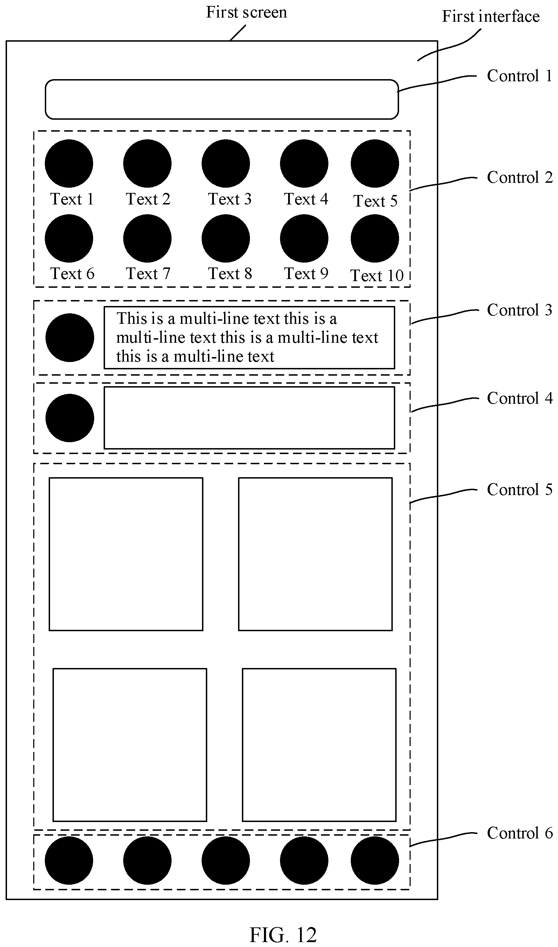

For example, the first interface is an interface shown in FIG. 12. As shown in FIG. 12, the first interface includes a plurality of controls: a control 1 to a control 6. The control 1 includes a search box; the control 2 includes a plurality of icons, and each icon corresponds to a text; the control 3 includes an icon and a text box, and the text box includes a multi-line text;

the control 4 includes an icon and a text box; the control 5 includes a plurality of icons; and the control 6 includes a plurality of icons.

For example, if the foldable terminal is in a folded state at an initial moment, the first screen is a folded screen. If the foldable terminal is in an unfolded state at the initial moment, the first screen is an unfolded screen.

S 1102: After detecting that the screen size changes from the first size to a second size, the foldable terminal modifies a screen size-related parameter, so that an initial canvas size of the interface is the first size.

For example, after detecting that the screen switches from the folded state to the unfolded state, the foldable terminal modifies the screen size-related parameter, so that the initial canvas size of the interface is a size of the folded screen in the folded state, that is, the first size is a size of the folded screen. In this case, the second size is a size of the unfolded screen.

For another example, after detecting that the screen switches from the unfolded state to the folded state, the foldable terminal modifies the screen size-related parameter, so that the initial canvas size of the interface is a size of the unfolded screen in the unfolded state, that is, the first size is a size of the unfolded screen. In this case, the second size is a size of the folded screen.

In an example, the foldable terminal may traverse a view tree (ViewTree) to perform measurement and layout restoration on each control and element in the view tree (ViewTree), so that a system considers that the interface is to be displayed on a screen of an initial size (namely, the first screen). In an example, the screen size-related parameter may be located in DisplayMetrics. The foldable terminal may modify the screen size-related parameter in DisplayMetrics to the size of the original screen (namely, the first screen), so that the initial canvas size of the interface is the first size.

DisplayMetrics is a class in an operating system (for example, an Android® system). DisplayMetrics is used to provide general information about display, such as a display size, a resolution, and a font. For a specific description of DisplayMetrics, refer to a conventional technology. Details are not described in embodiments of this application.

S1103: The foldable terminal obtains a layout type of the control and a type of the element on the first interface, where the layout type includes but is not limited to a common layout, a grid layout, and a list layout, and the type of the element includes but is not limited to a special shape, a multi-line text, and a child control.

The common layout refers to a layout manner that can support free stretching. A control in the common layout is usually not deformed due to free stretching. For example, layout types of the control 1, the control 3, and the control 4 in FIG. 12 are the common layout.

The grid layout means that limited elements are displayed in a control (for example, n elements are displayed, where n is a positive integer, and $n \geq 2$), and all elements are displayed in the control, where the n elements are of an equal size. In some embodiments, the n elements in the control in the grid layout may also be arranged at equal intervals. For example, layout types of the control 2 and the control 6 in FIG. 12 are the grid layout.

The list layout means that elements displayed in a control are presented in a dynamically loaded list and are not completely displayed in the control. For example, a layout type of the control 5 in FIG. 12 is the list layout.

A special shape is, for example, an element that needs to maintain a ratio (for example, an aspect ratio) of the element. For example, special icons in the control 3 and the control 4 in FIG. 12 need to maintain aspect ratios of the elements, and are special shapes. For another example, the special shape may be a user avatar.

The multi-line text is text content in the control 3 in FIG. 12.

S 1104: The foldable terminal arranges and draws the control and the element on the first interface based on the obtained layout type of the control and the type of the element by using a corresponding adaptive algorithm on a canvas of the second size.

The second size is a size of the second screen.

In an example, the foldable terminal may execute an adaptive policy like stretching, alignment, or translation of a corresponding control based on a layout type of the foregoing one or more controls and the type of the element, and invoke a corresponding adaptive algorithm to modify a position, a size, an alignment manner, and the like of the control. For example, in embodiments of this application, a position of the control may be modified by using a translation operation, a position and a size of the control may be modified by using a stretching operation, and an alignment manner may be modified by using an alignment operation. The alignment manner may include but is not limited to a left alignment manner, a right alignment manner, and a center alignment manner.

The following describes the corresponding adaptive algorithm based on a specific layout type of the control or the type of the element.

(1) For example, for a control whose layout type is the common layout, the control may be scaled exponentially according to a free stretching algorithm and based on a width-height stretch factor.

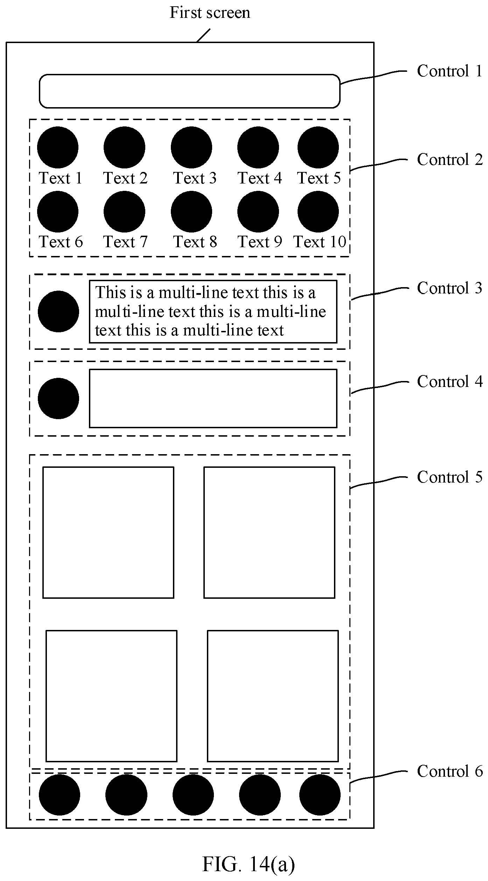

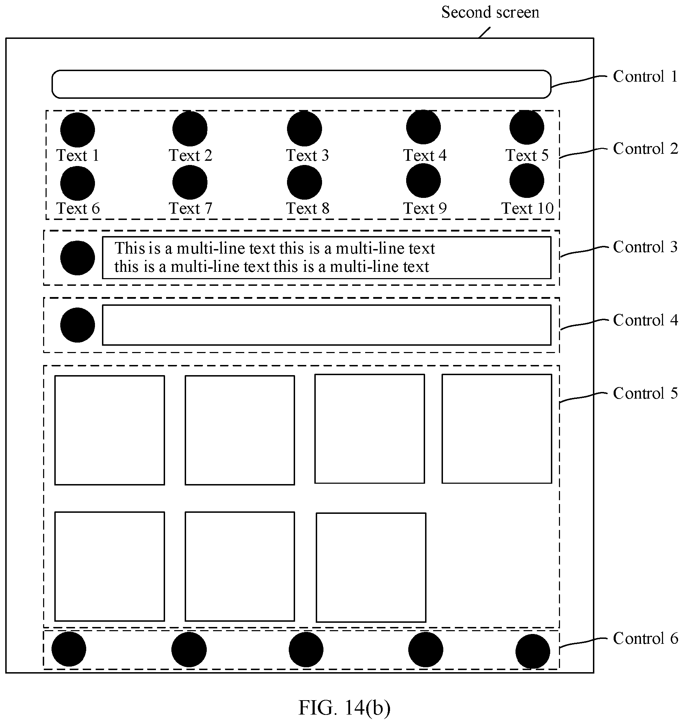

When an aspect ratio of the first size is different from an aspect ratio of the second size, after free stretching, an aspect ratio of the control usually changes, as shown in controls 1 in FIG. 14(a) and FIG. 14(b). However, this change in the aspect ratio does not cause visual deformation.

The width-height stretch factor is related to the size of the first screen (namely, the first size) and the size of the second screen (namely, the second size). For example, the screen of the foldable terminal switches from the folded state to the unfolded state. It is assumed that a width of the first screen is a and a height of the first screen is b, and a width of the second screen is 2a and a height of the second screen is b. In this case, the width-height stretch factor is (2a/a, b/b), that is, (2, 1). For example, the screen of the foldable terminal switches from the unfolded state to the folded state. It is assumed that a width of the first screen is 2a and a height of the first screen is b, and a width of the second screen is a and a height of the second screen is b. In this case, the width-height stretch factor is (a/2a, b/b), that is, (0.5, 1).

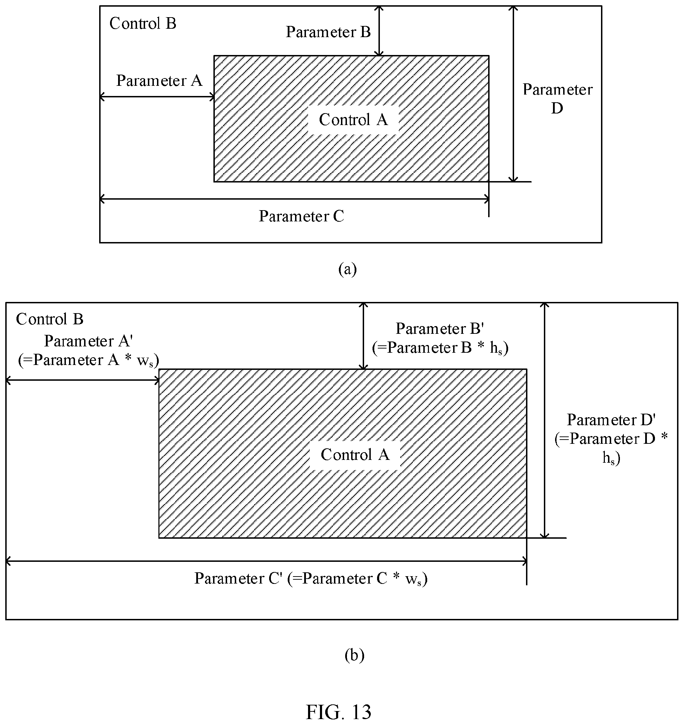

A control B including a child control A shown in (a) in FIG. 13 is used as an example. It is assumed that a width-height stretch factor is $(w_s, h_s)$. After stretching, as shown in (b) in FIG. 13, Parameter A' of the control = Parameter A * $w_s$, Parameter B' = Parameter B * $h_s$, Parameter C' = Parameter C * $w_s$, and Parameter D' = Parameter D * $h_s$. The parameter A, the parameter B, the parameter C, and the parameter D are respectively parameters of the control before stretching.

(2) For example, for a control whose layout type is the grid layout, a control region occupied by an element (for example, a child control) in a region corresponding to the control may be first determined based on a grid equal division policy, and then each element is stretched proportionally and is displayed in the center of the control region in which the element is located.

In an example, the foldable terminal may first obtain, through calculation according to the free stretching algorithm, the control region occupied by the element in the region corresponding to the control. Then, each element is stretched proportionally according to a proportional stretching algorithm. Finally, the corresponding element is displayed in the center of the control region in which each element is located. A core concept of the proportional stretching algorithm is stretching an element in a region corresponding to a control based on a smaller value $\min(w_s, h_s)$ (namely, a smaller value in $w_s$ and $h_s$) of the width-height stretch factor. For example, it is assumed that the width-height stretch factor is (1, 2). In this case, an element in a region corresponding to a control is stretched based on a width-height stretch factor 1 (namely, $\min(1, 2)$).

It may be understood that, as shown in FIG. 14(a), if the free stretching algorithm is used, proportional deformation (for example, from a circle to an ellipse) occurs on a plurality of elements in regions corresponding to the control 2 and the control 6 in the grid layout, affecting a display effect. However, if the proportional stretching algorithm is used, as shown in FIG. 14(b), a plurality of elements in the control 6 in the grid layout are displayed in an original aspect ratio, and no deformation occurs.

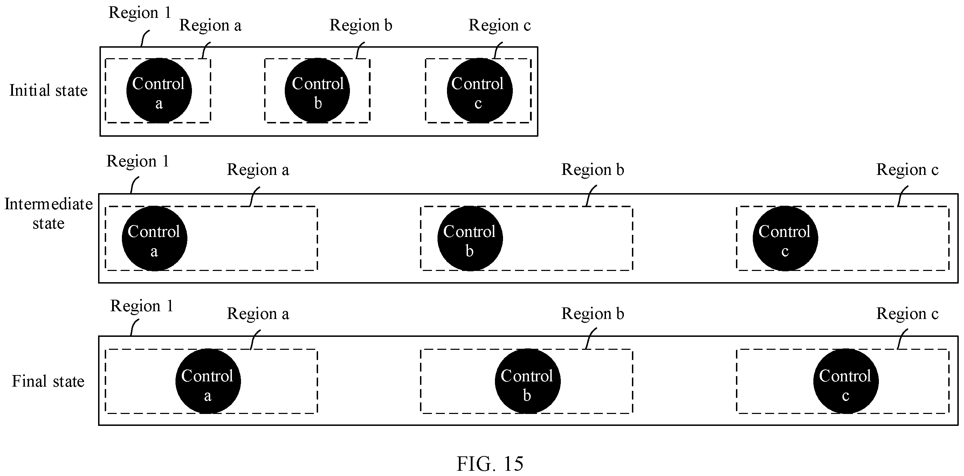

It may be understood that, for a control whose layout type is the grid layout, because all elements in a region corresponding to the control have been completely displayed, when a screen size changes, the grid equal division policy may be used for re-layout. As shown in FIG. 15, a core concept of the grid equal division policy is as follows: First, a region corresponding to a control (for example, a region 1 in an initial state shown in FIG. 15) is freely stretched based on a width-height stretch factor $(w_s, h_s)$ (for example, (2, 1)). Then, elements (for example, a control a, a control b, and a control c in an initial state shown in FIG. 15) in the region corresponding to the control and a corresponding display region (for example, a region a, a region b, and a region c in an initial state shown in FIG. 15) are stretched proportionally based on a width-height stretch factor $\min(w_s, h_s)$, namely, 1, by using the proportional stretching algorithm, to obtain a control in an intermediate state shown in FIG. 15. As shown in the intermediate state in FIG. 15, the control a, the control b, and the control c are respectively located in the left of the display region a, the region b, and the region c. Therefore, further correction is required. To be specific, finally, the elements (for example, the control a, the control b, and the control c in the intermediate state shown in FIG. 15) in the region corresponding to the control are translated rightward by offset, to obtain an effect of centering the elements in a final state shown in FIG. 15. Herein, offset = $(w_s - 1)/2$ * (Parameter C - Parameter A).

It should be noted that, for a control whose layout type is the grid layout, if a child control in the control corresponds to a text, during proportional stretching, the text corresponding to the child control is processed by using a policy consistent with that of the child control. For example, for the control 2 shown in FIG. 14(a), a text and a corresponding child control may be stretched proportionally as a whole and displayed in the center of a control region in which the child control is located, to obtain a display effect of the control 2 shown in FIG. 14(b).

In some embodiments, for a control that needs to be processed by using the proportional stretching algorithm, if the control is displayed on an interface in a centered/left-aligned/right-aligned manner in an initial state, to ensure a relative position relationship between the control and another control on the interface, the control may maintain an alignment manner in the initial state.

Center alignment is used as an example. In an example, a center point of a control may be used to anchor a control position to implement center alignment of the control.

For example, when the width-height stretch factor is $(w_s, h_s)$, center alignment of the control may be implemented by using the following calculation formula 1.1 to calculation formula 1.6:

$$\text{Parameter E' = Parameter E * } \min(w_s, h_s) \text{ (calculation formula 1.1);}$$

$$\text{Parameter F' = Parameter F * min } (w_s, h_s) \text{ (calculation formula 1.2);}$$

$$\text{Parameter A' = Parameter A * min } (w_s, h_s) + \text{Parameter E * min } (w_s, h_s) - \text{Parameter E'}$$
$$\text{(calculation formula 1.3);}$$

$$\text{Parameter B' = Parameter B * min } (w_s, h_s) + \text{Parameter F * min } (w_s, h_s) - \text{Parameter F'}$$
$$\text{(calculation formula 1.4);}$$

$$\text{Parameter C' = Parameter A' + Parameter E' (calculation formula 1.5);}$$

and

$$\text{Parameter D' = Parameter B' + Parameter F' (calculation formula 1.6)}$$

Left alignment is used as an example. In an example, a vertex in an upper left corner of a control may be used to anchor a control position to implement left alignment of the control.

For example, when the width-height stretch factor is $(w_s, h_s)$, left alignment of the control may be implemented by using the following calculation formula 2.1 to calculation formula 2.6:

$$\text{Parameter E' = Parameter E * min } (w_s, h_s) \text{ (calculation formula 2.1);}$$

$$\text{Parameter F' = Parameter F * min } (w_s, h_s) \text{ (calculation formula 2.2);}$$

$$\text{Parameter A' = Parameter A * min } (w_s, h_s) \text{ (calculation formula 2.3);}$$

$$\text{Parameter B' = Parameter B * min } (w_s, h_s) \text{ (calculation formula 2.4);}$$

$$\text{Parameter C' = Parameter A' + Parameter E' (calculation formula 2.5);}$$

and

$$\text{Parameter D' = Parameter B' + Parameter F' (calculation formula 2.6)}$$

In an example, a vertex in an upper right corner of a control may be used to anchor a control position to implement right alignment of the control.

For example, when the width-height stretch factor is $(w_s, h_s)$, right alignment of the control may be implemented by using the following calculation formula 3.1 to calculation formula 3.6:

$$\text{Parameter E' = Parameter E * min } (w_s, h_s) \text{ (calculation formula 3.1);}$$

$$\text{Parameter F' = Parameter F * min } (w_s, h_s) \text{ (calculation formula 3.2);}$$

$$\text{Parameter C' = Parameter C * min } (w_s, h_s) \text{ (calculation formula 3.3);}$$

$$\text{Parameter B' = Parameter B * min } (w_s, h_s) \text{ (calculation formula 3.4);}$$

$$\text{Parameter A' = Parameter C' – Parameter E' (calculation formula 3.5);}$$

and

$$\text{Parameter D' = Parameter B' + Parameter F' (calculation formula 3.6)}$$

(3) For example, for a control whose layout type is the list layout, because an element in a region corresponding to the control is not completely displayed, a quantity of displayed columns/rows of the control may be scaled exponentially based on a scaling policy of the quantity of displayed columns/rows, so that more/fewer elements are displayed based on an actual screen size.

In an example, the foldable terminal may first freely stretch a region corresponding to a control based on a width-height stretch factor, and then modify a quantity of columns/rows displayed in the control based on the width-height stretch factor, to display more/fewer elements. For example, if the width-height stretch factor is (2, 1), the quantity of columns is doubled.

The adaptive processing method for a control in the list layout provided in embodiments of this application is not only applicable to a list control presented in a dynamic loading manner of sliding up and down, but also applicable to a list layout control presented in a dynamic loading manner of sliding left and right.

In some embodiments, a parameter used to determine a quantity of columns/rows displayed in a control is, for example, spanCount. Based on this, in embodiments of this application, the quantity of columns/rows displayed in the control may be changed by modifying the parameter spanCount.

A list control 5 presented in a dynamic loading manner of sliding up and down shown in FIG. 14(a) is used as an example. After a region corresponding to the control 5 is freely stretched based on a width-height stretch factor, and a parameter (for example, spanCount) of a quantity of displayed columns is doubled based on a width-height stretch factor (2, 1), the control 5 displays a display effect of the control 5 shown in FIG. 14(b).

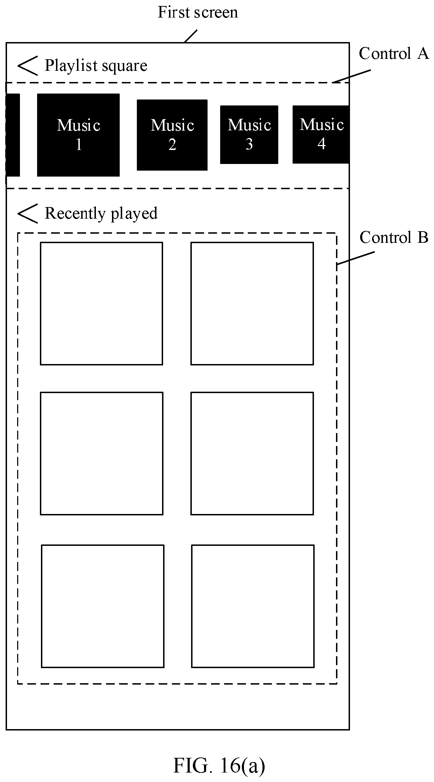

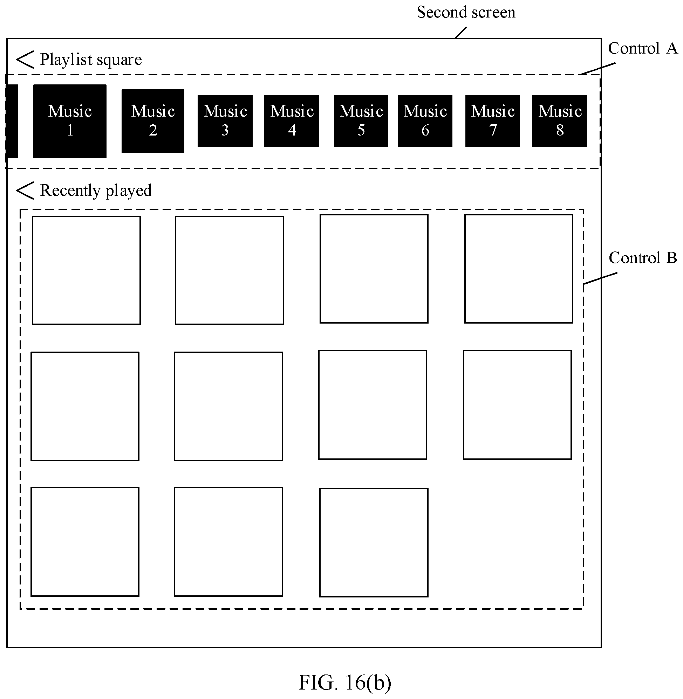

For another example, a list control B presented in a dynamic loading manner of sliding up and down shown in FIG. 16(a) is used as an example. After a region corresponding to the control B is freely stretched based on a width-height stretch factor, and a parameter (for example, spanCount) of a quantity of displayed columns is doubled based on a width-height stretch factor (2, 1), the control B displays a display effect of the control B shown in FIG. 16(b).

For another example, a list layout control A presented in a dynamic loading manner of sliding left and right shown in FIG. 16(a) is used as an example. The foldable terminal may first freely stretch a region corresponding to the control A based on a width-height stretch factor. Then, after a parameter (for example, spanCount) of a quantity of displayed columns is doubled based on a width-height stretch factor (2, 1), the control displays a display effect of the control A shown in FIG. 16(b).

(4) For example, for an element whose type is a special shape, targeted processing may be performed based on a specific situation.

For example, a special shape is an icon (icon) that needs to maintain a ratio (for example, an aspect ratio) of the element. In this case, proportional stretching may be performed on the element according to the proportional stretching algorithm, to keep the aspect ratio of the element unchanged.

For example, the special icons in the control 3 and the control 4 in FIG. 12 need to maintain aspect ratios of the elements. In this case, the foldable terminal may first freely stretch, based on a width-height stretch factor, a region corresponding to the control and a text layoutable region in the control, and then proportionally stretch a left circle in the control according to the proportional stretching algorithm.

(5) For example, for an element whose type is a multi-line text, text control filling and rearrangement may be performed.

For example, for an element whose type is a multi-line text, a region corresponding to a control and a text layoutable region in the control may be first freely stretched based on a width-height stretch factor. For example, a width of a freely stretched text layoutable region is: Parameter E' = $w_s$ * (Parameter C - Parameter A). Then, a text layout manner is recalculated based on the new layoutable region, a quantity of text lines is determined, and an actual height of the text is further determined. Finally, heights of the control and the text layoutable region are updated based on the calculated text layout manner.

In embodiments of this application, updating the heights of the control and the text layoutable region based on the calculated text layout manner may include but is not limited to: keeping widths of the control and the text layoutable region in an initial state unchanged, and recalculates the heights of the control and the text layoutable region based on the text layout manner (for example, a quantity of text lines).

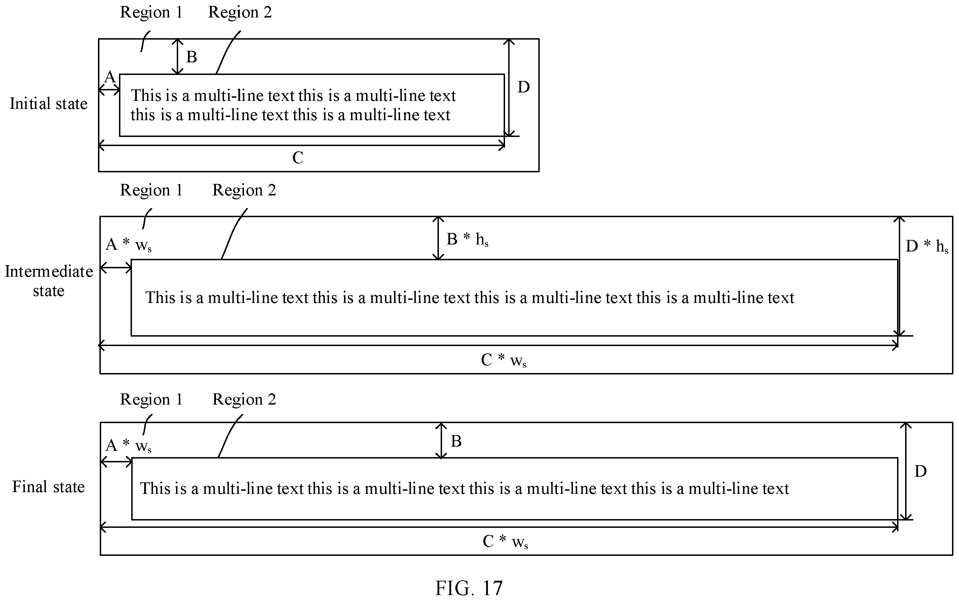

A horizontal multi-line text is used as an example. As shown in FIG. 17, a horizontal multi-line text layout depends on a width of a text layoutable region. Therefore, in embodiments of this application, a core concept of performing text control filling and rearrangement is as follows: First, a region corresponding to a control (for example, a region 1 in an initial state shown in FIG. 17) and a text layoutable region (for example, a region 2 in the initial state shown in FIG. 17) in the control are freely stretched based on a width-height stretch factor ($w_s$, $h_s$), to obtain a region corresponding to the control in an intermediate state in FIG. 17 (for example, a region 1 in the intermediate state shown in FIG. 17) and a text layoutable region (for example, a region 2 in the intermediate state shown in FIG. 17) in the control. Then, a quantity of texts in each line is determined based on a new text layoutable region (for example, the region 2 in the intermediate state shown in FIG. 17), to determine a quantity of text lines, and further determine an actual text height. Finally, heights (for example, reduced to heights in an original state) of the region corresponding to the control and the text layoutable region are adjusted based on the determined quantity of text lines, to obtain a region corresponding to the control in a final state in FIG. 17 (for example, a region 1 in the final state shown in FIG. 17) and a text layoutable region (for example, a region 2 in the final state shown in FIG. 17) in the control. As shown in FIG. 17, in the initial state, the text is displayed as a multi-line text. However, after the text layoutable region is freely stretched, the text layoutable region is wider, and the text is displayed in a single line. Therefore, the heights of the region corresponding to the control and the text layoutable region need to be adjusted based on the determined quantity of text lines, to obtain a more reasonable display effect.

In an example, the adaptive algorithm (for example, the free stretching algorithm, the proportional stretching algorithm, the grid equal division algorithm, an alignment algorithm, a translation algorithm, or a text control filling and rearrangement algorithm) may be preset in an operating system, for example, preset in an application framework layer of a terminal device.

It may be understood that, when a screen size (for example, an aspect ratio) changes, based on a conventional interface display method, a layout of an interface on an initial screen is different from a layout of an interface on a final screen. The example shown in FIG. 1 is used. Because a width of a final screen is twice a width of an initial screen, but screen heights are the same, an application layout is relatively sensitive to a screen width. Therefore, when an interface is laid out on the final screen, a size of each element is twice that in the initial screen. As a result, although the screen size increases, an amount of information displayed on the interface is about 50% of that displayed in the initial screen. For another example, based on a conventional interface display method, problems such as distortion of a control or an element of a special shape and an unreasonable text line layout may be caused.

However, according to the adaptive interface display method provided in embodiments of this application, the terminal device may use different policies such as stretching, translation, and alignment for different types of controls on an interface, to adapt to a screen size. For example, when the screen size is larger, a problem that an amount of information displayed on the interface is less is avoided. For another example, when the screen size is smaller, a problem that information displayed on the interface is overcrowded is avoided.

For example, the adaptive interface display effect shown in FIG. 14(a) and FIG. 14(b) is used as an example. After the adaptive interface layout provided in embodiments of this application is used, as shown in FIG. 14(b), the control 2 and the control 6 are laid out in a form of occupying a reasonable region on the premise that no distortion occurs and the layout is even; the control 3 is laid out in a form of occupying a reasonable region on the premise that a layout of a quantity of rows is reasonable; and the control 5 is laid out in a form of occupying a reasonable region to display more elements on the premise that no distortion occurs and the layout is even. Alternatively, an adaptive interface display effect shown in FIG. 16(a) and FIG. 16(b) is used as an example. After the adaptive interface layout provided in embodiments of this application is used, as shown in FIG. 16(b), the control A and the control B are laid out in a form of occupying a reasonable region to display more elements on the premise that no distortion occurs and the layout is even.

In addition, the method resolves an adaptation problem from a system layer while saving extra efforts of an application developer from a heavy workload of screen-based interface resizing. The method enables one interface that has been developed to adapt to terminal devices with different aspect ratios by using a general adaptive algorithm (for example, the free stretching algorithm, the proportional stretching algorithm, the grid equal division algorithm, the alignment algorithm, the translation algorithm, or the text control filling and rearrangement algorithm), and has a wider application coverage, higher adaptability, and stronger universality.

It should be noted that, in FIG. 13 to FIG. 17 of this application, only an example in which a screen size is larger is used. For a case in which a screen size is smaller, refer to the method described in the foregoing embodiments of this application. For example, for a control whose layout type is the common layout, if a screen size is smaller, the control may be scaled down exponentially according to the free stretching algorithm and based on a width-height stretch factor. For another example, for a control whose layout type is the grid layout, a control region occupied by an element in a region corresponding to the control may be first determined according to the proportional stretching algorithm, and then each element is scaled down proportionally. For another example, for a control whose layout type is the list layout, a quantity of displayed columns/rows of the control may be reduced exponentially, so that fewer elements are displayed based on an actual screen size. For another example, for an element that needs to maintain a ratio (for example, an aspect ratio) of the element, the element may be scaled down proportionally according to the proportional stretching algorithm, to keep the aspect ratio of the element unchanged. For another example, for a text (including a multi-line text and a single-line text), a region corresponding to a control and a text layoutable region in the control may be first freely scaled down based on a width-height stretch factor. Then, a text layout manner is recalculated based on the new layoutable region, to determine a quantity of text lines (for example, increase a quantity of text lines), and further determine an actual text height. Finally, heights of the control and the text layoutable region are updated (for example, the heights are increased) based on the calculated text layout manner.

In addition, it should be noted that in the foregoing embodiments of this application, only an example in which the screen of the foldable terminal switches from the folded state to the unfolded state or switches from the unfolded state to the folded state is used. For a cross-device interface projection scenario, refer to the method described in the foregoing embodiments of this application. A scenario in which a first device projects a screen to a second device is used as an example. A size of the first device is the foregoing first size, and a size of the second device is the foregoing second size. The second device may obtain a layout type of one or more controls on a projection interface and a type of an element in a region corresponding to the control, to arrange and draw the control on the projection interface on a canvas of the second size based on the layout type of the one or more controls and the type of the element in the control by using a corresponding adaptive algorithm. For example, the first device is a mobile phone, and the second device is a notebook computer. For another example, the first device is a driver screen device in a vehicle, and the second device is a front passenger display device or a rear display device.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the terminal device includes a corresponding hardware structure and/or software module for executing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

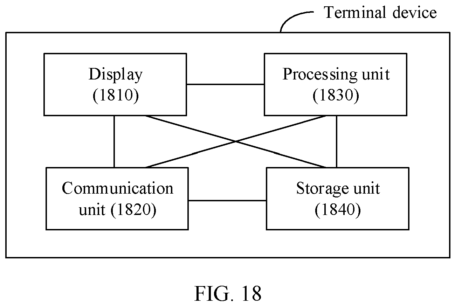

For example, when each functional module is obtained through division in an integrated manner, FIG. 18 is a block diagram of a structure of a terminal device according to an embodiment of this application. As shown in FIG. 18, the input device may include a display 1810, a communication unit 1820, a processing unit 1830, and a storage unit 1840.

The display 1810 is configured to support the terminal device in displaying an interface, for example, displaying a first interface and/or another interface related to this embodiment of this application. The communication unit 1820 is configured to support the terminal device in receiving and sending a radio signal, for example, sending or receiving projection data and/or a projectionrelated instruction, and/or another process related to this embodiment of this application. The processing unit 1830 is configured to: support the terminal device in obtaining a layout type of a control and a type of an element on the first interface, determine a corresponding adaptive algorithm based on the layout type of the control and the type of the element, arrange and draw the control and the element on the first interface on a canvas of a second size according to the determined adaptive algorithm, and/or perform another process related to this embodiment of this application. The storage unit 1840 is configured to store computer program instructions and related data that are related to this embodiment of this application.

In an example, the communication unit 1820 may include a radio frequency circuit. Specifically, the terminal device may receive and send radio signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an e-mail message, a short message service, and the like.

It should be understood that each module in the terminal device may be implemented in a form of software and/or hardware. This is not specifically limited herein. In other words, the input device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may exist in the terminal device as discrete components.

The foregoing descriptions about implementations allow a person skilled in the art to understand that, for the purpose of convenient and brief description, division of the foregoing functional modules is taken as an example for illustration. In an actual application, the foregoing functions can be allocated to different modules and implemented based on a requirement, that is, an inner structure of an apparatus is divided into different functional modules to implement all or some of the functions described above.

**Claims**

1. An adaptive interface display method, wherein the method comprises:

   displaying, by a terminal device, a first interface on a first screen, wherein a size of the first screen is a first size, and the first interface comprises one or more controls and elements;
   after detecting that the screen size changes from the first size to a second size, obtaining, by the terminal device, a layout type of the control and a type of the element on the first interface; and
   arranging and drawing, by the terminal device, the control and the element on the first interface based on the layout type of the control and the type of the element by using a corresponding adaptive algorithm on a canvas of the second size.

2. The method according to claim 1, wherein the layout type of the control comprises one or more of the following: a common layout, a grid layout, and a list layout.

3. The method according to claim 2, wherein the first interface comprises a first control, a layout type of the first control is a grid layout, and the first control comprises a plurality of elements arranged at equal intervals; and
   the arranging and drawing, by the terminal device, the control and the element on the first interface based on the layout type of the control and the type of the element by using a corresponding adaptive algorithm on a canvas of the second size specifically comprises:

   stretching, by the terminal device based on a width-height stretch factor $(w_s, h_s)$, a width and a height of a region corresponding to the first control by a corresponding multiple;
   stretching, by the terminal device based on the width-height stretch factor $(w_s, h_s)$, a width and a height of a control region occupied by the elements in the first control by a corresponding multiple;
   proportionally stretching, by the terminal device, the elements in the first control based on a minimum value

min($w_s$, $h_s$) of the width-height stretch factor; and

displaying, by the terminal device, the elements in the first control in the center of a stretched control region occupied by the corresponding elements.

4. The method according to claim 2 or 3, wherein the first interface comprises a second control, a layout type of the second control is a list layout, and the second control comprises a plurality of elements presented in a dynamic loading manner; and

the arranging and drawing, by the terminal device, the control and the element on the first interface based on the layout type of the control and the type of the element by using a corresponding adaptive algorithm on a canvas of the second size specifically comprises:

stretching, by the terminal device based on the width-height stretch factor ($w_s$, $h_s$), a width and a height of a region corresponding to the second control by a corresponding multiple;

adjusting, by the terminal device, a quantity of rows and/or a quantity of columns of the elements in the second control based on the width-height stretch factor ($w_s$, $h_s$); and

displaying, by the terminal device based on an adjusted quantity of rows and/or an adjusted quantity of columns, the elements in the second control in a stretched region corresponding to the second control.

5. The method according to any one of claims 2 to 4, wherein the first interface comprises a third control, and a layout type of the third control is a common layout; and

the arranging and drawing, by the terminal device, the control and the element on the first interface based on the layout type of the control and the type of the element by using a corresponding adaptive algorithm on a canvas of the second size specifically comprises:

stretching, by the terminal device, a width and a height of the third control by a corresponding multiple based on the width-height stretch factor.

6. The method according to any one of claims 2 to 5, wherein the first interface comprises a preset icon; and

the arranging and drawing, by the terminal device, the control and the element on the first interface based on the layout type of the control and the type of the element by using a corresponding adaptive algorithm on a canvas of the second size specifically comprises:

proportionally stretching, by the terminal device, the preset icon based on the minimum value min($w_s$, $h_s$) of the width-height stretch factor.

7. The method according to any one of claims 2 to 6, wherein the first interface comprises a text box, and the text box comprises a multi-line text; and

the arranging and drawing, by the terminal device, the control and the element on the first interface based on the layout type of the control and the type of the element by using a corresponding adaptive algorithm on a canvas of the second size specifically comprises:

stretching, by the terminal device based on the width-height stretch factor ($w_s$, $h_s$), a width and a height of the text box by a corresponding multiple;

calculating, by the terminal device, a layout manner of the multi-line text based on a stretched text box, wherein the layout manner represents a quantity of rows and a quantity of columns of the multi-line text; and

adjusting, by the terminal device, the height of the text box based on the layout manner of the multi-line text.

8. The method according to any one of claims 2 to 7, wherein the width-height stretch factor ($w_s$, $h_s$) represents a size relationship between the second size and the first size.

9. The method according to any one of claims 2 to 8, wherein the first interface comprises a fourth control and a fifth control, and when the terminal device displays the first interface on the first screen, the fourth control is aligned with the fifth control in a first alignment manner; and

the arranging and drawing, by the terminal device, the control and the element on the first interface based on the layout type of the control and the type of the element by using a corresponding adaptive algorithm on a canvas of the second size specifically comprises:

performing, by the terminal device, control stretching and element stretching separately based on layout types of the fourth control and the fifth control and types of elements in the controls by using the corresponding adaptive algorithm; and

adjusting, by the terminal device, a position of the fourth control and/or a position of the fifth control, so that the fourth control is aligned with the fifth control in the first alignment manner.

10. The method according to claim 9, wherein the first alignment manner comprises: left alignment, right alignment, or center alignment.

11. The method according to any one of claims 1 to 10, wherein the terminal device is a foldable device, the first size is a screen size of the terminal device in a first state, and the second size is a screen size of the terminal device in a second state.

12. The method according to claim 11, wherein the first state is a folded state, the second state is an unfolded state, and the first size is less than the second size.

13. A terminal device, wherein the terminal device comprises:

a display, configured to display a first interface on a first screen when the terminal device is in a first state, wherein a size of the display is a first size when the terminal device is in the first state, and the first interface comprises one or more controls and elements;
a detection unit, configured to detect a status of the terminal device or a size change of the display; and
a processing unit, configured to: after the detection unit detects that the screen size changes from the first size to a second size, obtain a layout type of the control and a type of the element on the first interface; and arrange and draw the control and the element on the first interface based on the layout type of the control and the type of the element by using a corresponding adaptive algorithm on a canvas of the second size.

14. The terminal device according to claim 13, wherein the layout type of the control comprises one or more of the following: a common layout, a grid layout, and a list layout.

15. The terminal device according to claim 14, wherein the first interface comprises a first control, a layout type of the first control is a grid layout, and the first control comprises a plurality of elements arranged at equal intervals; and
that the processing unit arranges and draws the control and the element on the first interface based on the layout type of the control and the type of the element by using the corresponding adaptive algorithm on the canvas of the second size specifically comprises:

the processing unit stretches, based on a width-height stretch factor ($w_s$, $h_s$), a width and a height of a region corresponding to the first control by a corresponding multiple;
the processing unit stretches, based on the width-height stretch factor ($w_s$, $h_s$), a width and a height of a control region occupied by the elements in the first control by a corresponding multiple;
the processing unit proportionally stretches the elements in the first control based on a minimum value $\min(w_s, h_s)$ of the width-height stretch factor; and
the processing unit displays the elements in the first control in the center of a stretched control region occupied by the corresponding elements.

16. The terminal device according to claim 14 or 15, wherein the first interface comprises a second control, a layout type of the second control is a list layout, and the second control comprises a plurality of elements presented in a dynamic loading manner; and
that the processing unit arranges and draws the control and the element on the first interface based on the layout type of the control and the type of the element by using the corresponding adaptive algorithm on the canvas of the second size specifically comprises:

the processing unit stretches, based on the width-height stretch factor ($w_s$, $h_s$), a width and a height of a region corresponding to the second control by a corresponding multiple;
the processing unit adjusts a quantity of rows and/or a quantity of columns of the elements in the second control based on the width-height stretch factor ($w_s$, $h_s$); and
the processing unit displays, based on an adjusted quantity of rows and/or an adjusted quantity of columns, the elements in the second control in a stretched region corresponding to the second control.

17. The terminal device according to any one of claims 14 to 16, wherein the first interface comprises a third control, and a layout type of the third control is a common layout; and

that the processing unit arranges and draws the control and the element on the first interface based on the layout type of the control and the type of the element by using the corresponding adaptive algorithm on the canvas of the second size specifically comprises:

the processing unit stretches a width and a height of the third control by a corresponding multiple based on the width-height stretch factor.

18. The terminal device according to any one of claims 14 to 17, wherein the first interface comprises a preset icon; and that the processing unit arranges and draws the control and the element on the first interface based on the layout type of the control and the type of the element by using the corresponding adaptive algorithm on the canvas of the second size specifically comprises:

the processing unit proportionally stretches the preset icon based on the minimum value $\min(w_s, h_s)$ of the width-height stretch factor.

19. The terminal device according to any one of claims 14 to 18, wherein the first interface comprises a text box, and the text box comprises a multi-line text; and

that the processing unit arranges and draws the control and the element on the first interface based on the layout type of the control and the type of the element by using the corresponding adaptive algorithm on the canvas of the second size specifically comprises:
the processing unit stretches, based on the width-height stretch factor $(w_s, h_s)$, a width and a height of the text box by a corresponding multiple;
the processing unit calculates a layout manner of the multi-line text based on a stretched text box, wherein the layout manner represents a quantity of rows and a quantity of columns of the multi-line text; and
the processing unit adjusts the height of the text box based on the layout manner of the multi-line text.

20. The terminal device according to any one of claims 14 to 19, wherein the width-height stretch factor $(w_s, h_s)$ represents a size relationship between the second size and the first size.

21. The terminal device according to any one of claims 14 to 20, wherein the first interface comprises a fourth control and a fifth control, and when the terminal device displays the first interface on the first screen, the fourth control is aligned with the fifth control in a first alignment manner; and
that the processing unit arranges and draws the control and the element on the first interface based on the layout type of the control and the type of the element by using the corresponding adaptive algorithm on the canvas of the second size specifically comprises:

the processing unit performs control stretching and element stretching separately based on layout types of the fourth control and the fifth control and types of elements in the controls by using the corresponding adaptive algorithm; and
the processing unit adjusts a position of the fourth control and/or a position of the fifth control, so that the fourth control is aligned with the fifth control in the first alignment manner.

22. The terminal device according to claim 21, wherein the first alignment manner comprises: left alignment, right alignment, or center alignment.

23. The terminal device according to any one of claims 13 to 22, wherein the terminal device is a foldable device, and the second size is a screen size of the terminal device in a second state.

24. The terminal device according to claim 23, wherein the first state is a folded state, the second state is an unfolded state, and the first size is less than the second size.

25. A terminal device, wherein the terminal device comprises:

a display, configured to display a first interface;
a memory, configured to store computer program instructions; and
a processor, configured to execute the computer program instructions, to support the terminal device in implementing the method according to any one of claims 1 to 12.

26. A computer-readable storage medium, wherein the computer-readable storage medium stores computer program code, and when the computer program code is executed by a processing circuit, the method according to any one of claims 1 to 12 is implemented.

27. A computer program product comprising instructions, wherein when the computer program product runs on a computer, the computer is enabled to perform the method according to any one of claims 1 to 12.

28. A chip system, wherein the chip system comprises a processing circuit and a storage medium, the storage medium stores computer program instructions, and when the computer program instructions are executed by the processing circuit, the method according to any one of claims 1 to 12 is implemented.

Screen 1

Screen 2

(a)

(b)

FIG. 1

200

Folding line

First
screen

First
screen

Second
screen

200

Second
screen

Folding edge

Folding edge

(a)

(b)

FIG. 2

300B

300A

Interface of an
application A

Interface of the application A

FIG. 3

Terminal device

Antenna 1

Antenna 2

| Mobile communication module<br>2G/3G/4G/5G<br>[450] | Wireless communication module<br>BT/WLAN/GNSS/NFC/IR/FM<br>[460] |

Speaker [470A]

Receiver [470B]

Microphone [470C]

Headset jack [470D]

Audio module [470]

Displays 1 to N [494]

Cameras 1 to N [493]

Indicator [492]

Motor [491]

Button [490]

Internal memory [421]

SIM card interfaces 1 to N [495]

External memory interface [420]

Processor [510]

Sensor module [480]

Pressure sensor [480A]

Gyroscope sensor [480B]

Barometric pressure sensor [480C]

Magnetic sensor [480D]

Acceleration sensor [480E]

Distance sensor [480F]

Optical proximity sensor [480G]

Fingerprint sensor [480H]

Temperature sensor [480J]

Touch sensor [480K]

Ambient light sensor [480L]

Bone conduction sensor [480M]

USB interface [430]

Charging input

Charging management module [440]

Power management module [441]

Battery [442]

FIG. 4

| Application layer | Camera | Calendar | Maps | WLAN | Music | Messages |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... | |

| Kernel layer | Input/Output device driver | Sensor driver | Display driver | ... |
|---|---|---|---|---|

FIG. 5

| Step 1: measurement | Calculate a display size of each control and/or element on an interface |
|---|---|
| Step 2: layout | Determine a specific position range of the control and/or element on the interface based on information obtained through measurement |
| Step 3: drawing | Draw each control and/or element on a canvas, and construct a drawing instruction |
| Step 4: rendering | Adjust brightness, contrast, saturation, and the like of a drawn layer |
| Step 5: displaying | Display a rendered layer on a display |

FIG. 6A

| Step A: measurement | Calculate a display size of each control and/or element on an interface, and restore a layout |
|---|---|
| Step B: layout | Determine a specific position range of each control and/or element based on information obtained through measurement, and perform layout classification and layout stretching |
| Step C: drawing | Draw each control and/or element on a canvas, construct a drawing instruction, and perform targeted processing such as maintaining a shape ratio and refilling and rearranging a multi-line text |
| Step D: rendering | Adjust brightness, contrast, saturation, and the like of a drawn layer |
| Step E: displaying | Display a rendered layer on a display |

FIG. 6B

| | |
|---|---|
| Step A':<br>interface<br>configuration | Set an adaptive display capability trustlist |

An interface is in the trustlist

| | |
|---|---|
| Step A:<br>measurement | Calculate a display size of each control and/or element on the interface, and restore a layout |

| | |
|---|---|
| Step B: layout | Determine a specific position range of each control and/or element based on information obtained through measurement, and perform layout classification and layout stretching |

| | |
|---|---|
| Step C:<br>drawing | Draw each control and/or element on a canvas, construct a drawing instruction, and perform targeted processing such as maintaining a shape ratio and refilling and rearranging a multi-line text |

| | |
|---|---|
| Step D:<br>rendering | Adjust brightness, contrast, saturation, and the like of a drawn layer |

| | |
|---|---|
| Step E:<br>displaying | Display a rendered layer on a display |

FIG. 7

EP 4 471 584 A1

Traverse an xml layout
file of the application

Traverse the view tree

```
┌──────────────┐     ┌──────────────┐     ┌──────────────┐     ┌──────────────┐     ┌──────────────┐     ┌──────────────┐
│   Start an   │ ──▶ │ Create a view│ ──▶ │ Measurement  │ ──▶ │    Layout    │ ──▶ │   Drawing    │ ──▶ │  Subsequent  │
│ application  │     │     tree     │     │              │     │              │     │              │     │  processing  │
└──────────────┘     └──────────────┘     └──────────────┘     └──────────────┘     └──────────────┘     └──────────────┘
```

FIG. 8

Traverse an xml layout
file of the application

Traverse the view tree

```
Start an
application
```
→
```
Create a view
tree
```
→
```
Measurement
```
→
```
Layout
```
→
```
Drawing
```
→
```
Subsequent
processing
```

Measure a control
Restore a layout

Determine a specific position
range of the control
Determine layout classification
Perform layout stretching

Determine
whether to start
an adaptive
adjustment
algorithm
— No

Determine
whether to start
the adaptive
adjustment
algorithm
— No

Yes

Yes

```
Save an
original screen
size
```

```
Change to the
original
screen size
```

FIG. 9

Control B

Parameter B

Parameter A

Control A

Parameter D

Parameter F

Parameter E

Parameter C

FIG. 10

A foldable terminal displays a first interface on a first screen, where a size of the first screen is a first size, and the first interface includes one or more controls and/or elements ⟿ S1101

After detecting that the screen size changes from the first size to a second size, the foldable terminal modifies a parameter related to the screen size, so that an initial canvas size of the interface is the first size ⟿ S1102

The foldable terminal obtains a layout type of the control and a type of the element on the first interface, where the layout type includes but is not limited to a common layout, a grid layout, and a list layout, and the type of the element includes but is not limited to a special shape, a multi-line text, and a child control ⟿ S1103

The foldable terminal arranges and draws the control and the element on the first interface based on the obtained layout type of the control and the obtained type of the element by using a corresponding adaptive algorithm on a canvas of the second size ⟿ S1104

FIG. 11

First screen

First interface

Control 1

Text 1    Text 2    Text 3    Text 4    Text 5

Text 6    Text 7    Text 8    Text 9    Text 10

Control 2

This is a multi-line text this is a
multi-line text this is a multi-line text
this is a multi-line text

Control 3

Control 4

Control 5

Control 6

FIG. 12

Control B

Parameter B

Parameter A

Control A

Parameter D

Parameter C

(a)

Control B

Parameter A'
(=Parameter A * $w_s$)

Parameter B'
(=Parameter B * $h_s$)

Control A

Parameter D'
(=Parameter D * $h_s$)

Parameter C' (=Parameter C * $w_s$)

(b)

FIG. 13

First screen

Control 1

Control 2

Text 1    Text 2    Text 3    Text 4    Text 5

Text 6    Text 7    Text 8    Text 9    Text 10

This is a multi-line text this is a
multi-line text this is a multi-line
text this is a multi-line text

Control 3

Control 4

Control 5

Control 6

FIG. 14(a)

Second screen

Control 1

Text 1    Text 2    Text 3    Text 4    Text 5

Text 6    Text 7    Text 8    Text 9    Text 10

Control 2

This is a multi-line text this is a multi-line text
this is a multi-line text this is a multi-line text

Control 3

Control 4

Control 5

Control 6

FIG. 14(b)

Region 1
Region a          Region b          Region c

Initial state

Control
a

Control
b

Control
c

Region 1          Region a                    Region b                              Region c

Intermediate
state

Control
a

Control
b

Control
c

Region 1          Region a                    Region b                              Region c

Final state

Control
a

Control
b

Control
c

FIG. 15

First screen

Control A

< Playlist square

| Music 1 | Music 2 | Music 3 | Music 4 |

< Recently played

Control B

FIG. 16(a)

Second screen

Control A

< Playlist square

| Music 1 | Music 2 | Music 3 | Music 4 | Music 5 | Music 6 | Music 7 | Music 8 |

< Recently played

Control B

FIG. 16(b)

EP 4 471 584 A1

Region 1    Region 2

**Initial state**

B

A

This is a multi-line text this is a multi-line text
this is a multi-line text this is a multi-line text

D

C

Region 1    Region 2

**Intermediate state**

$A * w_s$

$B * h_s$

$D * h_s$

This is a multi-line text this is a multi-line text this is a multi-line text this is a multi-line text

$C * w_s$

Region 1    Region 2

**Final state**

$A * w_s$

B

D

This is a multi-line text this is a multi-line text this is a multi-line text this is a multi-line text

$C * w_s$

FIG. 17

Terminal device

| Display (1810) | Processing unit (1830) |
|---|---|
| Communication unit (1820) | Storage unit (1840) |

FIG. 18

## INTERNATIONAL SEARCH REPORT

| International application No. |
|---|
| **PCT/CN2023/081679** |

| **A.** | **CLASSIFICATION OF SUBJECT MATTER** |
|---|---|

G06F 9/451(2018.01)i;H04M1/724(2021.01)i

According to International Patent Classification (IPC) or to both national classification and IPC

| **B.** | **FIELDS SEARCHED** |
|---|---|

Minimum documentation searched (classification system followed by classification symbols)

G06F H04M

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 折叠屏, 柔性屏, 折叠, 展开, 打开, 开合, 大小, 尺寸, 控件, 布局, 元素, folding screen, flexible screen, fold+, unfold+, open+, clos+, size, dimension, control, layout, element

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 114115769 A (HUAWEI TECHNOLOGIES CO., LTD.) 01 March 2022 (2022-03-01) description, paragraphs 0014, 0015, 0158, and 0172-0184 | 1-28 |
| X | CN 109918165 A (BEIJING XIAOMI MOBILE SOFTWARE CO., LTD.) 21 June 2019 (2019-06-21) description, paragraphs 0064-0086 | 1-28 |
| A | CN 110597510 A (HUAWEI TECHNOLOGIES CO., LTD.) 20 December 2019 (2019-12-20) entire document | 1-28 |
| A | CN 112114928 A (XI'AN VANXVM ELECTRONICS TECHNOLOGY CO., LTD.) 22 December 2020 (2020-12-22) entire document | 1-28 |
| A | CN 114077429 A (HUAWEI TECHNOLOGIES CO., LTD.) 22 February 2022 (2022-02-22) entire document | 1-28 |
| A | US 2011099494 A1 (MICROSOFT CORP.) 28 April 2011 (2011-04-28) entire document | 1-28 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 April 2023** | **20 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

| | International application No. |
|---|---|
| | **PCT/CN2023/081679** |

| Patent document cited in search report | | | Publication date (day/month/year) | Patent family member(s) | | | Publication date (day/month/year) |
|---|---|---|---|---|---|---|---|
| CN | 114115769 | A | 01 March 2022 | None | | | |
| CN | 109918165 | A | 21 June 2019 | None | | | |
| CN | 110597510 | A | 20 December 2019 | US | 2022269515 | A1 | 25 August 2022 |
| | | | | WO | 2021027661 | A1 | 18 February 2021 |
| | | | | EP | 3995948 | A1 | 11 May 2022 |
| | | | | CN | 114365080 | A | 15 April 2022 |
| CN | 112114928 | A | 22 December 2020 | None | | | |
| CN | 114077429 | A | 22 February 2022 | WO | 2022037432 | A1 | 24 February 2022 |
| US | 2011099494 | A1 | 28 April 2011 | None | | | |

Form PCT/ISA/210 (patent family annex) (July 2022)

**EP 4 471 584 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210302733